# EUROPÄISCHE PATENTSCHRIFT

(11) **EP 2 921 880 B1**
(45) Veröffentlichungstag und Bekanntmachung des Hinweises auf die Patenterteilung: **08.05.2019**
(21) Anmeldenummer: 14160786.1
(22) Anmeldetag: 19.03.2014
(51) Int. Cl.: G01S 19/49, G01S 19/41

(54) **Verfahren und mobile Kommunikationseinrichtung zur verbesserten Bestimmung der aktuellen Position in Echtzeit**
Method and mobile communication device for improved real time determination of the current position
Procédé et dispositif de communication mobile pour la détermination améliorée de la position actuelle en temps réel

(43) Veröffentlichungstag der Anmeldung: 23.09.2015
(73) Patentinhaber: Deutsche Telekom AG, 53113 Bonn (DE)
(72) Erfinder: Dr. Witych, Michael, 53227 Bonn (DE)
(74) Vertreter: Blumbach · Zinngrebe Patent- und Rechtsanwälte

(56) Entgegenhaltungen:
- US-A1- 2008 255 715
- US-A1- 2012 232 792
- US-B1- 6 216 983

## Beschreibung

Die Erfindung betrifft ein Verfahren zur verbesserten Bestimmung der aktuellen Position einer beweglichen Kommunikationscinrichtung in Echtzeit sowie eine bewegliche Kommunikationseinrichtung zur verbesserten Bestimmung ihrer aktuellen Position in Echtzeit, und zwar beispielhaft für durch GPS bestimmte Positionen und zeitversetzt erhaltene EGNOS-Zusatzinformationen.

Globale satellitenbasierte Navigationssysteme, welche auch unter der Bezeichnung GNSS (Global Navigation Satellite System) bekannt sind, dienen beispielsweise der Positionsbestimmung und Navigation von mobilen Geräten, beispielsweise von mobilen Funktelefonen, welche einen GPS-Empfänger enthalten. Ein bekanntes GNSS-System ist das GPS (Global Positioning System), also das US-amerikanische NAVSTAR-GPS-System.

Um die durch ein solches Navigationssystem ermittelte Positionsgenauigkeit verbessern zu können, werden Navigations-Ergänzungssysteme eingesetzt, welche Korrekturdaten zur Verbesserung der Positionsinformation und auch Integritätsinformationen bereitstellen können. Integritätsinformationen enthalten zum Beispiel Angaben über die Vertrauenswürdigkeit der in der Vergangenheit bereitgestellten Beobachtungsinformationen zur Positionsberechnung und/oder der berechneten Positionsinformation und/oder Angaben über die Zuverlässigkeit und den ordnungsgemäßen Betrieb des eingesetzten Navigationssystems. Ein bekanntes Navigations-Ergänzungssystem ist beispielsweise ein SBAS (Satellite Based Augmentation System). Solche satellitenbasierte Ergänzungssysteme sind in Europa unter der Bezeichnung EGNOS (European Geostationary Navigation Overlay Satellite System (oder Service)) und in der USA unter der Bezeichnung WAAS (Wide Area Augmentation System) bekannt.

Derartige Navigations-Ergänzungssysteme gewinnen die Korrekturdaten zur Verbesserung der Positionsbestimmung zum Beispiel mittels geeignet verteilter ortsfester Bodenstationen mit bekannten Positionen und laufender Bestimmung dieser Positionen mittels Auswertung der Signale der GNSS Satelliten, wie dies bei dem europäischen System EGNOS der Fall ist. Die Korrekturdaten können auf unterschiedlichen Wegen übertragen werden, zum Beispiel mittels Internet und Mobilfunk oder zum Beispiel alternativ nur über Satellitensignale. Beim EGNOS System werden die Korrektursignale zum Beispiel auch von den geostationären EGNOS Satelliten ausgesendet und können in einem Mobilfunktelefon mit geeigneter Empfangsantenne empfangen werden. Bei EGNOS werden die Korrektursignale zum Beispiel auf L1 gesendet, also einer der Frequenzen die GPS nutzt.

Solche Korrekturwerte und Integritätswerte werden zuerst bestimmt und danach zum Nutzer zum Beispiel entweder über das Internet in Kombination mit Mobilfunk oder aber mittels Satellitensignale auf der Frequenz L1 zum Beispiel zu einem geeigneten Mobilfunktelefon mit zum Beispiel GPS und EGNOS Chip und Software übertragen. Aufgrund der Bestimmungsdauer zur Berechnung der Korrekturwerte und der Zustellungszeit haftet den empfangenen Korrekturwerten ein systembedingter Zeitverzug an. Bei einem EGNOS-System beträgt der Zeitverzug etwa 6 Sekunden. Mit anderen Worten gesprochen, stehen Korrekturwerte, denen im Ergänzungssystem einem Gültigkeitszeitpunkt ta zugeordnet worden sind, erst zu einem späteren Empfangszeitpunkt tb einem GPS-Empfänger beispielsweise einer mobilen Kommunikationseinrichtung zur Verfügung. Deshalb kann eine Verbesserung beziehungsweise Korrektur der Positionsgenauigkeit eines GPS-Empfängers unter Berücksichtigung der Positionszusatzinformationen, erhalten zum Zeitpunkt tb, nur zum Zeitpunkt ta, also nur für Werte in der Vergangenheit berechnet werden. Demzufolge kann die Positionsgenauigkeit eines GPS-Empfängers aufgrund der SBAS Korrekturwerte nur für in der Vergangenheit ermittelte Positionsinformationen verbessert werden.

Aus der US 2008/0255715 A1 sind ein Verfahren und ein Navigationssystem bekannt, welche einem Piloten eine navigatorische Führung beim Landen auch dann liefern, wenn am Flughafen eine bodengestützte Infrastruktur fehlt. Hierzu wird zum einen ein Kahlmannfilter verwendet, welches Daten von einem GPS-Empfänger und optional von einem Magnetometer empfängt. In dem GPS-Empfänger kann ein WAAS-Troposphären-Fehlermodell implementiert sein, welches vom GPS-Empfänger verwendet wird, um Fehler in GPS-Signalen, die durch die Troposphäre verursacht worden sind, zu kompensieren. Ferner ist ein Navigationsprozessor vorgesehen, der eine Navigationslösung bereitstellt. Zusätzlich weist das bekannte System Initialsensoren auf, welche Daten dem Navigationsprozessor liefern, wenn GPS-Daten nicht mehr verfügbar sind. Der Navigationsprozessor verwendet die von dem Initialsensor kommenden Daten in einem Schwerkraftfehlermodell, um die Navigationslösung zu berechnen, wenn keine GPS-Daten zur Verfügung stehen. Auf diese Weise kann der Pilot eines Flugzeuges auch navigatorisch geführt werden, wenn keine GPS-Daten verfügbar sind.

Aus der US 2012/232792 A1 ist ein Verfahren zur präzisen Bestimmung der Position einer mobilen Einrichtung bekannt, die einen GPS-Empfänger und Inertialsensoren aufweist. Zur präzisen Bestimmung werden GPS-Positionsdaten mit Inertialsensordaten kombiniert. Insbesondere muss zwischen den GPS-Positionsdaten und den Inertialsensordaten eine Zeitsynchronisation durchgeführt werden, indem die Inertialsensordaten und eine Zeitinformation zwischengespeichert werden.
Der Erfindung liegt daher die Aufgabe zugrunde, sowohl ein Verfahren zur Verfügung zu stellen als auch eine mobile Kommunikationseinrichtung zu schaffen, mit denen es möglich ist, die Genauigkeit der aktuelle Position einer mobilen Kommunikationseinrichtung in Echtzeit genauer als bisher zu bestimmen.

Diese Aufgabe wird durch ein Verfahren bzw. eine bewegliche Kommunikationseinrichtung gemäß Anspruch 1 bzw. 9 gelöst.

Ein Kerngedanke der Erfindung kann darin gesehen werden, die durch ein Navigations-Ergänzungssystem bereitgestellten Positionszusatzinformationen, die für einen Zeitpunkt taₙ gültig sind, zu einer mobilen, also beweglichen Kommunikationseinrichtung zu übertragen, wobei diese Positionszusatzinformationen für die bewegliche Kommunikationseinrichtung erst zu einem späteren Zeitpunkt tbₙ zur Verfügung stehen. Zudem werden in der mobilen Kommunikationseinrichtung Positionsinformationen und/oder Bewegungsdaten und/oder Bewegungsmodelle für Bewegungsänderungen zumindest vom Zeitpunkt taₙ bis zum Zeitpunkt tbₙ bereitgestellt, die zu diesen Bereitstellungszeitpunkten auch gültig sind, so dass die mobile Kommunikationseinrichtung in der Lage ist, im Wesentlichen zum Zeitpunkt tbₙ ihre aktuelle Position in Abhängigkeit von der zum Zeitpunkt taₙ bereitgestellten Positionsinformationen, von der zum Zeitpunkt tbₙ empfangenen Positionszusatzinformationen und/oder, sofern sich die bewegliche Kommunikationseinrichtung zwischen den Zeitpunkten taₙ und tbₙ bewegt hat, von den zwischen den Zeitpunkten taₙ und tbₙ ermittelten bewegungsbezogenen Informationen und/oder Bewegungsmodellen für Bewegungsänderungen in Echtzeit verbessert zu bestimmen.

Ein weiterer Gesichtpunkt kann darin gesehen werden, dass die Genauigkeitsverbesserung insbesondere auch durch die geeignete Nutzung "veralteter" Korrekturwerte bzw. Positionszusatzinformationen erreicht werden kann.

Ein weiterer Aspekt der Erfindung kann somit darin gesehen werden, einer mobilen Kommunikationseinrichtung Positionszusatzinformationen - gültig für die Vergangenheit - bereitzustellen, welche nicht nur helfen, die Genauigkeit der Positionsbestimmung in der Vergangenheit, sondern auch in der Gegenwart zu verbessern, und zwar in Echtzeit.

Die Erfindung wird nachfolgend anhand einiger Ausführungsbeispiele in Verbindung mit den Zeichnungen näher erläutert. Es zeigen:
- Fig. 1: ein beispielhaftes Kommunikationssystem mit einer mobilen Kommunikationseinrichtung gemäß der Erfindung,
- Fig. 2: eine grafische Darstellung zur Erläuterung der Auswirkung des Verfahrens zur Verbesserung der Bestimmung der aktuellen Position der in Fig. 1 gezeigten mobilen Kommunikationseinrichtung,
- Fig. 3: eine weitere grafische Darstellung zur Erläuterung der Auswirkung des Verfahrens zur Verbesserung der Bestimmung der aktuellen Position der in Fig. 1 gezeigten mobilen Kommunikationseinrichtung.

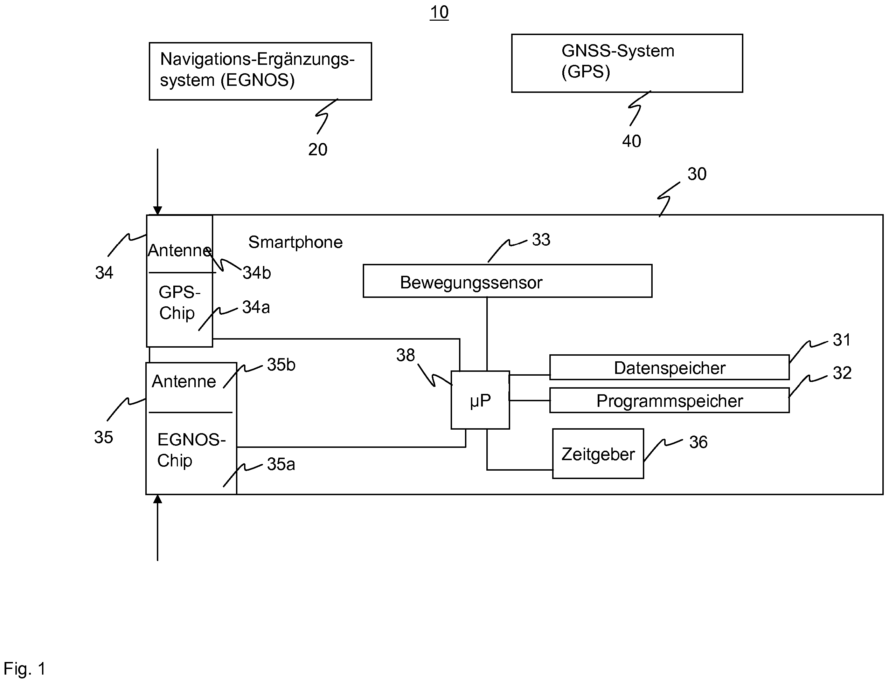

Fig. 1 zeigt ein beispielhaftes Positionsbestimmungssystem 10, welches ein Navigationssystem 40, beispielsweise ein GNSS(Global Navigation Satellite System)-System, vorzugsweise ein GPS-System 40, und ein Navigations-Ergänzungssystem 20, beispielsweise ein SBAS(Satellite Base Augmentation System)-System, vorzugsweise das in Europa eingesetzte EGNOS(European Geostationary Navigation Overlay Service)-System aufweisen kann. Das EGNOS-System 20 liefert in an sich bekannter Weise Positionszusatzinformationen, insbesondere Korrekturwerte. Die Position eines Objekts kann mit einer höheren Genauigkeit bestimmt werden, wenn die Positionszusatzinformationen zur Verbesserung der Informationen und Auswertungen von GPS Daten genutzt werden.

Mit Hilfe des Positionsbestimmungssystems 10 kann eine entsprechend ausgebildete mobile Kommunikationseinrichtung 30 in die Lage versetzt werden, ihre aktuelle Position in Echtzeit für einen Gültigkeitszeitpunkt tbₙ mit verbesserter Genauigkeit zu bestimmen. Lediglich der einfacheren Darstellung wegen ist nur eine bewegliche Kommunikationseinrichtung 30 dargestellt.

Bei der beweglichen Kommunikationseinrichtung 30 kann es sich beispielsweise um ein Smartphone, ein Notebook, eine in einem Fahrzeug installierte Kommunikationseinrichtung oder dergleichen handeln. Die bewegliche Kommunikationseinrichtung 30 weist eine erste Empfangseinrichtung 34 auf, die dazu ausgebildet ist, Signale von dem Navigationssystem 40 zu empfangen, um ihre Position bzw. die diese Position beschreibende Positionsinformationen ermitteln zu können. Handelt es sich bei dem Navigationssystem 40 beispielsweise um ein GPS-System, enthält die erste Empfangseinrichtung 34 einen GPS-Chip 34a und eine Antenne 34b. Die erste Empfangseinrichtung 34 fungiert somit als GPS-Empfänger. Weiterhin weist die mobile Kommunikationseinrichtung 30 eine Bewegungserfassungseinrichtung 33 zum Erfassen einer Bewegung der beweglichen Kommunikationseinrichtung 30 auf, wobei die Bewegung wenigstens abschnittsweise zwischen einem ersten Zeitpunkt taₙ und einem zweiten, späteren Zeitpunkt tbₙ erfasst wird. Hierzu kann die Erfassungseinrichtung 33 bewegungsbezogene Informationen, welche Bewegungsdaten enthalten, erzeugen, mit denen beispielsweise ein dreidimensionaler Vektor berechnet werden kann, der die Positionsänderung der beweglichen Kommunikationseinrichtung 30 in x-, y- und/oder z-Richtung von einem ersten Zeitpunkt taₙ zu einem zweiten Zeitpunkt tbₙ wiedergibt. Die Erfassungseinrichtung 33 kann beispielsweise einen einzelnen Bewegungssensor, zum Beispiel einen Beschleunigungssensor, oder dergleichen aufweisen. Die Bewegungserfassungseinrichtung 33 kann auch mehrere Sensoren aufweisen, um die Bewegungen und/oder Bewegungsinformationen der mobilen Kommunikationseinrichtung 30 präziser erfassen und hieraus die Positionsänderung berechnen zu können. Außerdem kann die Erfassungseinrichtung 33 dazu ausgebildet sein, Weiterverarbeitungsschritte basierend auf Bewegungsmodellen und/oder Modellen für Bewegungsänderungen zwischen zwei Zeitpunkten taₙ und tbₙ durchzuführen, um Lücken bei der Erfassung von bewegungsbezogenen Informationen geeignet zu überbrücken. Diese Weiterverarbeitungsschritte können aber auch in einer Steuereinheit 38 durchgeführt werden, wobei die entsprechenden Anweisungen beispielsweise in einem Programmspeicher 32 gespeichert sind und aus diesem geladen werden können. Als bewegungsbezogene Informationen können zusätzlich weitere Informationen wie zum Beispiel Positionsinformationen, die nur vom GPS-Empfängers 34 bereitgestellt werden, berücksichtigt werden, die in einem Bearbeitungsintervall von taₙ bis tbₙ gültig sind.

Weiterhin weist die mobile Kommunikationseinrichtung 30 eine zweite Empfangseinrichtung 35 auf, die dazu ausgebildet ist, die von dem Navigations-Ergänzungssystem 20 bereitgestellten und ausgesendeten Positionszusatzinformationen zu empfangen. Die Positionszusatzinformationen enthalten vorzugsweise zu einem bestimmten ersten Zeitpunkten taₙ zugeordnete Korrekturdaten und gegebenenfalls deren Genauigkeit sowie gegebenenfalls Integritätsinformationen über das Kommunikationssystem 10, die zur verbesserten Positionsbestimmung verwendet werden können.

Handelt es sich bei dem Navigations-Ergänzungssystem 20 um ein EGNOS-System, so kann die zweite Empfangseinrichtung 35 einen EGNOS-Chip 35a und eine Antenne 35b aufweisen. Der GPS-Chip 34a und der EGNOS-Chip 35a können auch als integrierter Gesamtchip vorliegen. Die EGNOS Daten können nicht nur per direktem Satellitensignal empfangen werden, sondern auch über ein Mobilfunksignal via mobilem Zugangspunkt aus dem Internet bezogen werden.

Die in der mobilen Kommunikationseinrichtung 30 implementierte Steuereinrichtung 38 ist beispielsweise als Mikroprozessor ausgebildet. Die Steuereinrichtung 38 kann vorzugsweise dazu ausgebildet sein, in Echtzeit, also im Wesentlichen zu einem zweiten Zeitpunkt tbₙ, eine verbesserte aktuelle Positionsinformation, welche für den zweiten Zeitpunkt tbₙ gültig ist, zu ermitteln. Hierzu wird unter Steuerung der Steuereinrichtung 38 eine für den ersten Zeitpunkt taₙ gültige Positionsinformation in Abhängigkeit von der dem ersten Zeitpunkt taₙ zugeordneten Positionsinformation, welche vom GPS-Empfänger bereitgestellt wird, und der dem ersten Zeitpunkt taₙ zugeordneten Positionszusatzinformation, welche von dem EGNOS-System 20 der zweiten Empfangseinrichtung 35 zur Verfügung gestellt worden ist, neubestimmt bzw. korrigiert. Die Steuereinrichtung 38 ist ferner dazu ausgebildet, in Echtzeit nunmehr in Abhängigkeit von der für den Zeitpunkt taₙ gültigen, korrigierten Positionsinformation und von den vom Bewegungssensor 33 zwischen den Zeitpunkten taₙ und tbₙ bereitgestellten bewegungsbezogenen Informationen eine für den Zeitpunkt tbₙ gültige, verbesserte aktuelle Positionsinformation in Echtzeit zu ermitteln. Die bewegungsbezogenen Informationen sind für den Zeitraum taₙ bis tbₙ gültig. Die bewegungsbezogenen Informationen können zusätzlich oder alternative Positionsinformationen, welche nur vom GPS-Empfänger 34 zwischen den Zeitpunkten taₙ und tbₙ bereitgestellt werden, und/oder Bewegungsinformationen enthalten, welche aus Bewegungsmodellen für Bewegungen und/oder aus Bewegungsmodellen für Bewegungsänderung gewonnen werden, und/oder aus einem Sensor, zum Beispiel vom Bewegungssensor 33, zur Messung von Bewegung gewonnen werden.

In dem Programmspeicher 32 können u. a. Anweisungen für die Steuereinrichtung 38 gespeichert werden, um den Betrieb und alle Funktionen der beweglichen Kommunikationseinrichtung 30, welches beispielsweise ein Smartphone ist, steuern und überwachen zu können.

Weiterhin kann ein Datenspeicher 31 vorgesehen sein, in dem die vom GPS-Chip 34 ermittelten Positionsinformationen, das sind Positionskoordinaten und gegebenenfalls deren Genauigkeit, die vom EGNOS-Chip empfangenen Positionszusatzinformationen und die vom Bewegungssensor 33 gelieferten Bewegungsdaten bzw. bewegungsbezogenen Informationen, die Ergebnisse bisheriger Berechnungen sowie die dazugehörenden Bestimmungszeitpunkte, auch für die Vergangenheit, gespeichert werden. Weiterhin können alle von der mobilen Kommunikationseinrichtung 30 beziehungsweise dem Mikroprozessor 38 aktuell in Echtzeit bestimmten Positionsinformationen und die dazugehörenden Beobachtungszeitpunkte, insbesondere bewegungsbezogene Informationen im Datenspeicher 31 abgelegt werden. Um den bewegungsbezogenen Informationen und den Positionsinformationen einen Bestimmungs- beziehungsweise Beobachtungszeitpunkt zuordnen zu können, kann ein Zeitgeber 36 in der mobilen Kommunikationseinrichtung implementiert sein. Vorzugsweise wird der Zeitgeber 36 mit dem Navigations-Ergänzungssystem 20 und/oder dem GPS-System 40 synchronisiert.

Die Steuereinrichtung 38 ist mit dem Zeitgeber 36, dem Programmspeicher 32, dem Datenspeicher 31, dem Bewegungssensor 33, dem GPS-Chip 34 und dem EGNOS-Chip 35 verbunden, um alle Funktionen gemäß der Erfindung ausführen zu können.

Bereits an dieser Stelle sei angemerkt, dass die im Datenspeicher 31 abgelegten Daten in einer besonderer Weise strukturiert gespeichert sein können. So können Bewegungsdaten, Positionszusatzdaten und Positionsinformationen, die einem bestimmten Bearbeitungsintervall zugeordnet sind, zusammengehörend abgelegt und/oder so abgelegt werden, dass auf ein beliebiges Bearbeitungsintervall schnell zugegriffen werden kann. Ein n-tes Bearbeitungsintervall wird durch einen ersten Zeitpunkt taₙ und einen zweiten, späteren Zeitpunkt tbₙ festgelegt. Ein erster Zeitpunkt taₙ legt zweckmäßigerweise den Zeitpunkt fest, für den eine für taₙ gültige Positionszusatzinformation vom EGNOS-System 20 bereitgestellt, zur mobilen Kommunikationseinrichtung 30 übertragen und der beweglichen Kommunikationseinrichtung 30 zum Zeitpunkt tbₙ zur Verfügung steht. Außerdem können Positionsinformationen vom GPS-Empfänger 34 bereitgestellt werden, die zu einem ersten Zeitpunkt taₙ gültig sind und zum gleichen Zeitpunkt taₙ in der Kommunikationseinrichtung 30 bereitgestellt werden. Ein zweiter, späterer Zeitpunkt tbₙ legt im Wesentlichen den Zeitpunkt fest, zu dem die aktuelle Position der mobilen Kommunikationseinrichtung 30 in Echtzeit berechnet werden soll. Ferner legen die jeweiligen Zeitpunktpaare taₙ und tbₙ ein n-tes Bearbeitungsintervall fest, in welchem bewegungsbezogene Informationen erfasst werden. Die Zeitdifferenz zwischen jedem Zeitpunktpaar taₙ und tbₙ entspricht im Wesentlichen dem Zeitversatz der Aktualität der Positionszusatzinformationen des EGNOS-Systems 20, zu dem diese in der mobilen Kommunikationseinrichtung 30 genutzt werden können. Bei dem EGNOS-System 20 beträgt tbₙ-taₙ=6sec.

Die Funktionsweise des in Fig. 1 gezeigten Positionsbestimmungssystems 10 wird nachfolgend näher erläutert.

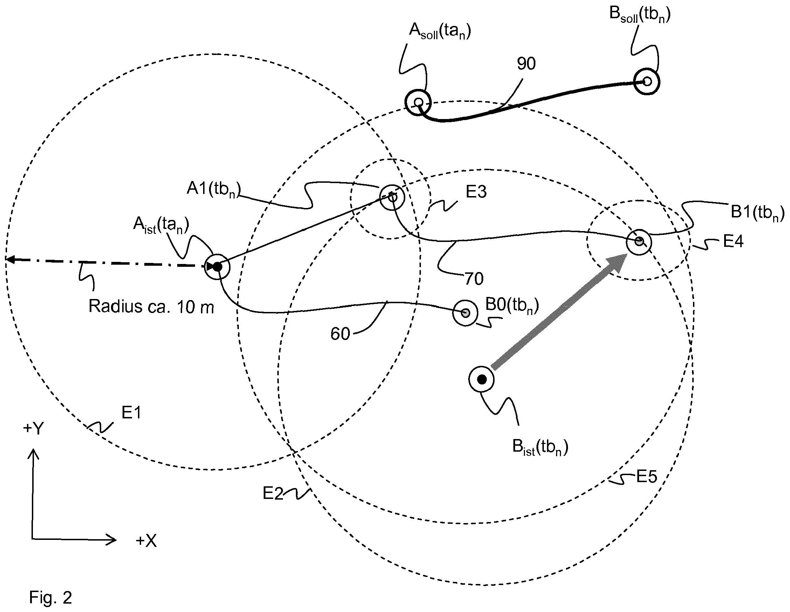

Zunächst werden einige Szenarien anhand der Fig. 2 geschildert.

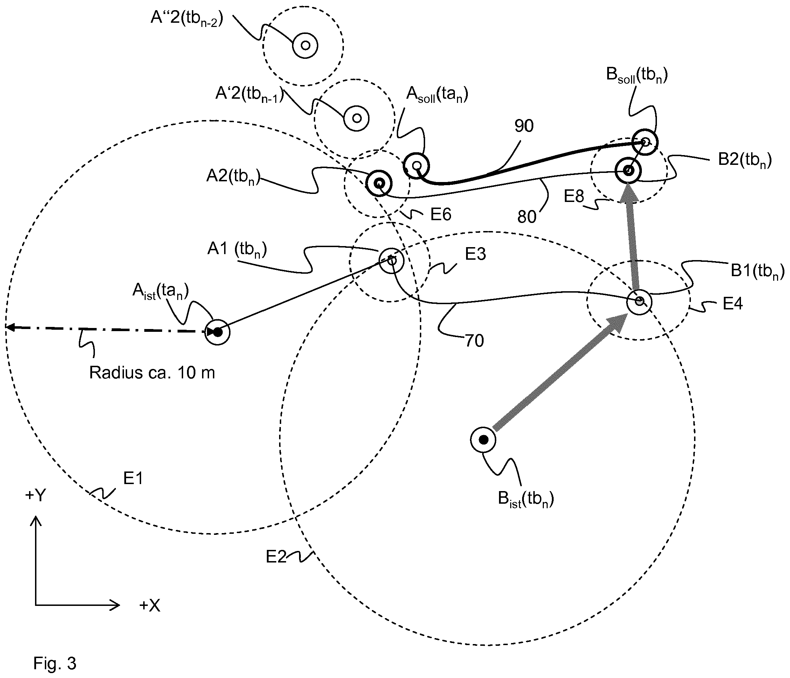

Angemerkt sei, dass für die Fig. 2 und die Fig. 3 die nachfolgend beispielhaft angeführt Legende für die Zuordnung von Positionsinformationen zu Zeitpunkten gilt:

### Legende:

[berechnete Lage von A gültig zum Zeitpunkt taₙ] [Verfahren oder Sollwert](Berechnungszeitpunkt)
z. B. [A] [1] (tbₙ) =: A1(tbₙ) oder
z. B. [A] [iₛₜ] (tbₙ) =: Aᵢₛₜ(tbₙ) oder
z. B. [A] [ₛₒₗₗ] (taₙ) =: Aₛₒₗₗ(taₙ)

Zeitgleich zur Berechnung der absoluten Lage kann auch die jeweilige Fehlerellipse Ei der Lage berechnet werden.

Angenommen sei nunmehr, dass die mobile Kommunikationseinrichtung 30 bisher noch keine Positionsbestimmung durchgeführt hat und daher der Datenspeicher 31 leer ist. Die Soll-Position der beweglichen Kommunikationseinrichtung 30 zu einem Zeitpunkt taₙ ist in Fig. 2 durch den Punkt Aₛₒₗₗ(taₙ) wiedergegeben, während die Soll-Position zu einem späteren Zeitpunkt tbₙ durch den Punkt Bₛₒₗₗ(tbₙ) dargestellt ist. Eine Linie 90 zwischen den beiden Punkten beschreibt beispielhaft die tatsächliche Bewegung der mobilen Kommunikationseinrichtung 30 zwischen den Zeitpunkten taₙ und tbₙ.

Nunmehr sei angenommen, dass zu einem ersten Zeitpunkt taₙ erstmalig vom GPS-Empfänger 34 die Positionsinformation bzw. Position der beweglichen Kommunikationseinrichtung 30 bestimmt wird, und dass im Wesentlichen zu einem aktuellen, späteren Zeitpunkt tbₙ eine verbesserte aktuelle Positionsinformation gültig für den Zeitpunkt tbₙ in Echtzeit ermittelt werden soll. Der Index n, der die Anzahl von Bearbeitungsintervallen bezeichnet, kann in diesem Fall auf 1 gesetzt werden. Dieser Positionsinformation, die neben den Positionskoordinaten auch deren Genauigkeit enthalten kann, wird der Zeitpunkt taₙ zugeordnet und beide Daten können im Datenspeicher 31 gespeichert werden. Die dazugehörende Position ist in Fig. 2 mit Aᵢₛₜ(taₙ) bezeichnet. Die um den Punkt Aᵢₛₜ(taₙ) gezeichnete Fehlerellipse E1 gibt beispielsweise die berechnete Genauigkeit wieder. Weiterhin sei angenommen, dass das EGNOS-System eine für den gleichen Zeitpunkt taₙ gültige Positionszusatzinformation bereitstellt und diese Information zur mobilen Kommunikationseinrichtung 30 übertragen wird. Etwa zum zweiten Zeitpunkt tbₙ wird die Positionszusatzinformation, gültig für Zeitpunkt taₙ, zusammen mit dem ihr zugeordneten Zeitstempel, der den Zeitpunkt taₙ enthält, vom EGNOS-Chip 35 empfangen. Auch die Positionszusatzinformation und der dazugehörende Zeitstempel können im Datenspeicher 31 abgelegt werden. Zwischen dem ersten Zeitpunkt taₙ und dem zweiten Zeitpunkt tbₙ erfasst zum Beispiel der Bewegungssensor 33 die relative Bewegung der mobilen Kommunikationseinrichtung 30. Die dazugehörenden Bewegungsdaten bzw. bewegungsbezogenen Informationen können ebenfalls zusammen mit dem Bearbeitungsintervall, welches durch den ersten und zweiten Zeitpunkt definiert wird, unter Steuerung des Mikroprozessors 38 im Datenspeicher 31 abgelegt werden. Die bewegungsbezogenen Informationen können zusätzlich oder alternativ Informationen, die aus Bewegungsmodellen gewonnen werden, oder Positionsinformationen, die nur vom GPS-Empfänger 34 zwischen dem ersten Zeitpunkt taₙ und dem zweiten Zeitpunkt tbₙ bereitgestellt werden, enthalten. Im Wesentlichen zum Zeitpunkt tbₙ liest die Steuereinrichtung 38 die erforderlichen Daten aus dem Datenspeicher 31 aus und
a) bestimmt im Wesentlichen zum Zeitpunkt tbₙ unter Anwendung eines geeigneten, im Programmspeicher 32 hinterlegten Algorithmus eines mathematischen Modells eine zum ersten Zeitpunkt taₙ gültige Positionsinformation in Abhängigkeit von der dem ersten Zeitpunkt taₙ zugeordneten Positionsinformation, welche vom GPS-Empfänge 34 bereitgestellt wird, und von der dem ersten Zeitpunkt taₙ zugeordnete Positionszusatzinformation neu
b) und außerdem ermittelt sie hierauf aufbauend aus der für den Zeitpunkt taₙ neu bestimmten Positionsinformation, welche für den ersten Zeitpunkt taₙ gültig ist, und aus den zwischen dem ersten Zeitpunkt taₙ und dem zweiten Zeitpunkt tbₙ bereitgestellten bewegungsbezogenen Informationen die verbesserte aktuelle Positionsinformation, welche für den zweiten Zeitpunkt tbₙ gültig ist.

Dies Position lag bisher je nach Algorithmus als Bᵢₛₜ(tbₙ) oder B0(tbₙ) oder einem gewichteten Mittel aus beiden Werten vor, wobei Bᵢₛₜ(tbₙ) zum Beispiel die nur mit GPS Daten des GPS-Empfängers 34 berechnete Position ist und B0(tbₙ) additiv aus Aᵢₛₜ(taₙ) plus der Bewegungsberechnung von taₙ bis tbₙ folgt. Im Wesentlichen wird zum zweiten, aktuellen Zeitpunkt tbₙ eine gegenüber dem Punkt Bᵢₛₜ(tbₙ) oder B0(tbₙ) oder einem auf einer Gewichtung aus beiden resultierenden nicht dargestellten Punkt verbesserte aktuelle Positionsinformation B1(tbₙ) zum Gültigkeitszeitpunkt tbₙ für die bewegliche Kommunikationseinrichtung 30 in Echtzeit erhalten. Sofern Bᵢₛₜ (tbₙ) eine ausreichende gute Genauigkeit gegenüber den anderen Eingabewerten hat, kann Bᵢₛₜ(tbₙ) ebenfalls bei der Berechnung von B1(tbₙ) genutzt werden.

Das Ergebnis einer beispielhaften Anwendung des Algorithmus auf die Eingangsgrößen, das sind vorzugsweise die in der Positionszusatzinformation enthaltenen Korrekturdaten und deren Genauigkeit, vorzugsweise die in der Positionsinformationen enthaltenen Positionskoordinaten und deren Genauigkeit zum Zeitpunkt taₙ, sowie die zwischen dem ersten Zeitpunkt taₙ und dem zweiten Zeitpunkt tbₙ bestimmten bewegungsbezogenen Informationen und deren Genauigkeiten, kann anhand der Fig. 2 illustriert werden.

Wenn die Positionsinformationen, die vom GPS-Empfänger 34 im Zeitraum taₙ bis tbₙ und hier insbesondere zum Zeitpunkt tbₙ eine ausreichend hohe Genauigkeit besitzen, können diese Positionsinformationen ebenfalls bei der Ermittlung der aktuellen Positionsinformation für den Zeitpunkt tbₙ in die Berechnungen einfließen. Diese Positionsinformationen sind dann in den bewegungsbezogenen Informationen mit enthalten.

Die Abschätzungen hierfür sind mit bekannten Methoden vorab möglich und können in der Kommunikationseinrichtung 30 in Echtzeit getroffen werden.

In Fig. 2 wurde auf die Berücksichtigung dieser vom GPS-Empfänger 34 zwischen taₙ und tbₙ bestimmten Positionsinformationen verzichtet. Außerdem wurde eine bestimmte Genauigkeit für die relativen Positionsänderungen aufgrund eines Bewegungssensors angenommen, deren Ausmaß in Fig. 2 nicht explizit gekennzeichnet ist, aber aus den resultierenden Fehlerellipsen der Berechnungen für E4 von der Größenordnung her ableitbar ist. Außerdem wurde vorgegeben, dass große Positionsänderungen auch größere absolute Fehleranteile hervorrufen, was durch die unterschiedlichen Hauptachslängen der resultierenden Fehlerellipse E4 in Fig. 2 erkennbar ist.

Eine erste Verbesserung der Positionsbestimmung kann dadurch erzielt werden, dass unter Berücksichtigung der dem Zeitpunkt taₙ zugeordneten Positionszusatzinformationen die Genauigkeit der Position der beweglichen Kommunikationseinrichtung 30, welche in Fig. 2 beispielhaft durch den Punkt Aᵢₛₜ(taₙ) dargestellt ist, erhöht wird, so dass die verbesserte Position der beweglichen Kommunikationseinrichtung 30 einem Punkt A1(tbₙ) entspricht. Es ist wichtig darauf hinzuweisen, dass die Positionsbestimmung des Punktes A1(tbₙ) zwar erst zum Zeitpunkt tbₙ erfolgt, aber der Punkt A1(tbₙ) lediglich die verbesserte Position der mobilen Kommunikationseinrichtung 30 gültig für den Zeitpunkt taₙ darstellt. Der Punkt der Position A1(tbₙ) liegt daher in der Vergangenheit. Um den Punkt A1(tbₙ) ist wiederum beispielhaft eine berechnete Fehlerellipse E3 gezeichnet. Die erste Verbesserung der Positionsbestimmung bezieht sich auf die Position zum Zeitpunkt taₙ und ist ohne Kenntnis zusätzlicher, nach dem Zeitpunkt taₙ gültiger Informationen auch eine Verbesserung für eine Aussage, bei der die Position statistisch betrachtet für den Zeitpunkt tbₙ gültig sein könnte, da diese Position einen Wahrscheinlichkeitsbezug zur wahrscheinlichsten Position zum Zeitpunkt taₙ hat.

Mit der Kenntnis zusätzlicher nach dem Zeitpunkt taₙ gültiger Informationen kann eine zweite Verbesserung der Positionsbestimmung für den aktuellen Zeitpunkt tbₙ dadurch erzielt werden, dass die bewegungsbezogenen Informationen, die beispielsweise einen dreidimensionalen Vektor definieren, der die resultierende Positionsänderung der beweglichen Kommunikationseinrichtung 30 in x-, y- und/oder z-Richtung zwischen einem ersten Zeitpunkt taₙ und einem zweiten Zeitpunkt tbₙ und gegebenenfalls deren Genauigkeiten wiedergibt, zu den Positionskoordinaten des Punktes A1(tbₙ) addiert werden. Dann gelangt man zu einer neu bestimmten Position, welche in Fig. 2 mit B1(tbₙ) bezeichnet ist. Eine Linie 70, welche den Punkt A1(tbₙ) mit dem Punkt B1(tbₙ) verbindet, beschreibt beispielhaft die vom Bewegungssensor 33 erfasste Bewegung der mobilen Kommunikationseinrichtung 30 zwischen den Zeitpunkten taₙ und tbₙ. Der Punkt B1(tbₙ) entspricht somit der verbesserten aktuellen Position der beweglichen Kommunikationseinrichtung 30, welche im Wesentlichen zum aktuellen Zeitpunkt tbₙ berechnet wurde und für diesen Zeitpunkt gültig ist. Die um den Punkt B1 gezeichnete Fehlerellipse E4 gibt beispielhaft die berechnete Genauigkeit wieder. Der Pfeil zwischen dem Punkt B1(tbₙ) und einem Punkt Bᵢₛₜ(tbₙ), welcher der vom GPS-Empfänger 34 ohne Korrektur bestimmten Position zum Zeitpunkt tbₙ entspricht, zeigt die Verbesserung des Verfahrens gegenüber einer nicht korrigierten Positionsbestimmung an, welche lediglich der GPS-Empfänger 34 bereitstellt.

Je nach Nutzung unterschiedlicher Datenquellen und mathematischer Auswertemodelle können beispielsweise alle Berechnungen in einem Guss, das heißt in einem einzigen Gleichungssystem, zur Bestimmung der aktuellen Position der beweglichen Kommunikationseinrichtung 30 durchgeführt werden oder auch eine sequentielle Berechnung und/oder rekursive Filtertechniken genutzt werden.

Weiterhin sei angemerkt, dass die Auswahl eines geeigneten mathematischen Modells auf den statistischen Eigenschaften der Beobachtungen - das sind vorzugsweise die Positionsinformationen, Positionszusatzinformationen und bewegungsbezogenen Informationen - basieren kann, wobei insbesondere Modelle zweckmäßig sind, welche die Aufdeckung von "Ausreißern" in den Beobachtungen ermöglichen. Hierbei können auch die Genauigkeiten aller Eingabegrößen mit berücksichtigt werden. Verschiedene geeignete mathematische Modelle und unterschiedliche algorithmische Implementierungen sind bekannt.

Wie bereits angedeutet, kann die Position des Punktes A1(tbₙ), die zum Zeitpunkt tbₙ berechnet wurde, aber für den Zeitpunkt taₙ gültig ist, dadurch bestimmt werden, dass der Mikroprozessor 38 die dem ersten Zeitpunkt taₙ zugeordnete Positionsinformation nur in Abhängigkeit von der dem ersten Zeitpunkt taₙ zugeordneten Positionszusatzinformation bestimmt. Eine solche Positionsbestimmung A1(tbₙ) ist als Sonderfall dann auch zugleich die aktuelle Position B1(tbₙ), also der in Echtzeit berechneten Position, die zum aktuellen Zeitpunkt tbₙ gültig ist, wenn eine Prüfeinrichtung der mobilen Kommunikationseinrichtung 30 festgestellt hat, dass entweder im Wesentlichen zwischen dem ersten Zeitpunkt taₙ und dem zweiten Zeitpunkt tbₙ keine translatorische Bewegung der beweglichen Kommunikationseinrichtung 30 vorliegt, oder dass alle translatorischen Bewegungen in diesem Zeitraum zum Zeitpunkt tbₙ in Summe im Wesentlichen signifikant ausreichend genau den Nullvektor ergeben. Die Funktion der Prüfeinrichtung kann die Steuereinrichtung 38 ausführen. Je nach Größe der sich fortpflanzenden Einzelfehler der inkrementellen Bewegungen auf die resultierende aufsummierte Translation kann die absolute Position zwar keine Veränderung erhalten, aber die Genauigkeit der Position kann sich sogar erheblich verschlechtern, wodurch die Steuereinrichtung 38 veranlasst sein kann, auch bei einem Nullvektor die Berechnungen durchzuführen, um die resultierende Genauigkeit besser berechnen zu können.

In Fig. 2 ist noch ein weiterer Punkt B0(tbₙ) mit der Positionsgenauigkeit Fehlerellipse E5 dargestellt, der die Positionsinformation, welche zum zweiten Zeitpunkt tbₙ berechnet wurde und für diesen Zeitpunkt gültig ist, der beweglichen Kommunikationseinrichtung 30 wiedergibt, ohne dass die für den Zeitpunkt taₙ gültige Positionszusatzinformation genutzt wird. Diese Position kann dadurch bestimmt werden, dass der Mikroprozessor 38 die dem ersten Zeitpunkt taₙ zugeordnete Positionsinformation nur in Abhängigkeit von den zwischen den Zeitpunkten taₙ und tbₙ bestimmten bewegungsbezogenen Informationen, d. h. ohne die dem ersten Zeitpunkt taₙ zugeordneten Positionszusatzinformation, neu bestimmt. Eine solche Positionsbestimmung wird zum Beispiel durchgeführt, wenn eine Prüfeinrichtung der mobilen Kommunikationseinrichtung 30 festgestellt hat, dass zwar keine dem ersten Zeitpunkt taₙ zugeordnete Positionszusatzinformation in der beweglichen Kommunikationseinrichtung 30 angekommen sind, sich die bewegliche Kommunikationseinrichtung 30 zwischen dem ersten Zeitpunkt taₙ und dem zweiten Zeitpunkt tbₙ aber bewegt hat, wie dies durch die Linie 60 angedeutet wird, und zum Beispiel zum Zeitpunkt tbₙ keine Positionsinformation Bᵢₛₜ (tbₙ) durch den GPS Empfänger 34 geliefert wird. Die Funktion der Prüfeinrichtung kann wiederum die Steuereinrichtung 38 ausführen. Ein Vorteil dieses Verfahrens kann darin gesehen werden, dass, selbst wenn die dem Zeitpunkt taₙ zugeordneten Positionszusatzinformationen nicht an der mobilen Kommunikationseinrichtung 30 angekommen sind, eine Korrektur, das heißt eine Berechnung der aktuellen Positionsinformation möglich ist. Würde zusätzlich auch die Positionsinformation Bᵢₛₜ (tbₙ) durch den GPS Empfänger 34 geliefert worden sein, so könnte Bᵢₛₜ(tbₙ) sogar zur Berechnung von B0(tbₙ) zusätzlich herangezogen werden, wodurch sich die Fehlerellipse verbessern und die Lage sich in Richtung Bᵢₛₜ (tbₙ) verschieben würde. Die Grafik in Fig. 2 enthält dieses nicht.

Angemerkt sei, dass die Positionskoordinaten und gegebenenfalls deren Genauigkeit umso genauer bestimmt werden können, je genauer zum Beispiel die vom Bewegungssensor 33 bestimmten bewegungsbezogenen Informationen im Vergleich zu den vom GPS-Empfänger 34 bestimmten Positionsinformationen sind, welche durch die Positionszusatzinformationen korrigiert werden, und je geringer die erfassten Bewegungsdaten mit den Positionsinformationen korreliert sind. Die Kenntnis hierüber kann die Steuereinrichtung 38 nutzen, um die Abläufe zur Positionsinformationsbestimmung geeignet zu steuern. Auch diese vereinfachte Vorgehensweise kann noch dadurch verbessert werden, dass die nur vom GPS-Empfänger 34 bereitgestellten Positionsbestimmungen zwischen dem Zeitpunkt taₙ bis einschließlich tbₙ in einer Ausgleichung zur Positionsinformationsbestimmung in Echtzeit genutzt werden. Schätzverfahren hierzu sind bekannt.

Angemerkt sei ferner, dass neben den Positionskoordinaten des Punktes A1(tbₙ), des Punktes B0(tbₙ) oder des Punktes B1(tbₙ) auch die Genauigkeit der jeweiligen Positionskoordinaten bestimmt werden kann, indem eine Fehlerfortpflanzung der Fehler der Eingangsgrößen, das sind insbesondere die Positionszusatzinformationen und die Positionsinformation zum Zeitpunkt taₙ sowie die zwischen den Zeitpunkten taₙ und tbₙ bestimmten Bewegungsdaten, auf die korrigierte Zielgröße berechnet wird. Die Fehler der Eingangsgrößen werden hierbei durch die Bestimmungsmethoden mitgeliefert und/oder vorab geschätzt oder, wenn möglich, zum Beispiel im Schätzverfahren mit bestimmt. Die Methoden der Fehlerfortpflanzung und Schätzverfahren zur Positionsbestimmung mit Berücksichtigung der Genauigkeiten von Eingabegrößen und die Eliminierung von grob falschen Messwerten, den sogenannten Ausreißern, durch das Schätzverfahren und Ausreißertests oder die Anwendung von robusten Schätzverfahren sind dem Fachmann hinlänglich bekannt.

Wir erläutern nunmehr anhand von Figur 3 ein weiteres Szenario.

Fig. 2 ist in Fig. 3 enthalten. Zusätzlich sind die Punkte A2(tbₙ), A'2(tbₙ₋₁), A"2(tbₙ₋₂) und B2(tbₙ) eingezeichnet, deren Bedeutung nachfolgend erläutert wird.

Angenommen sei, dass bereits zu den Zeitpunkten taₙ₋₁ und taₙ₋₂, welche zeitlich vor dem Zeitpunkt taₙ liegen, Positionszusatzinformationen vom EGNOS-System 20 bereitgestellt und zur beweglichen Kommunikationseinrichtung 30 übertragen worden sind. Diese Positionszusatzinformationen wurden etwa zu den Zeitpunkten tbₙ₋₁ bzw. tbₙ₋₂, welche zeitlich vor dem Zeitpunkt tbₙ liegen, vom EGNOS-Chip 35 empfangen und im Datenspeicher 31 mit den zugeordneten Zeitpunkten abgelegt. Weiterhin sei angenommen, dass der GPS-Empfänger 34 Positionsinformationen zu den Zeitpunkten taₙ₋₁ und taₙ₋₂ bestimmt hat. Diese Positionsinformationen wurden zusammen mit den zugeordneten Zeitpunkten im Datenspeicher 31 abgelegt. Weiterhin sei angenommen, dass, wie bereits zuvor hinsichtlich Fig. 2 ausführlich erläutert, eine für den Zeitpunkt taₙ₋₁ gültige Positionsinformation in Abhängigkeit von der dem ersten Zeitpunkt taₙ₋₁ zugeordneten Positionsinformation, welche vom GPS-Empfänger 34 bereitgestellt worden ist, und einer dem ersten Zeitpunkt taₙ₋₁ zugeordneten Positionszusatzinformation im Wesentlichen zum Zeitpunkt tbₙ₋₁ neu bestimmt worden ist, um eine verbesserte aktuelle Positionsinformation im Wesentlichen zum Zeitpunkt tbₙ₋₁ erhalten zu haben. In ähnlicher Weise wurde eine für den jeweiligen ersten Zeitpunkt taₙ₋₂ gültige Positionsinformation in Abhängigkeit von der dem ersten Zeitpunkt taₙ₋₂ zugeordneten Positionsinformation, welche vom GPS-Empfänger 34 bereitgestellt worden ist, und einer von der dem jeweiligen ersten Zeitpunkt taₙ₋₂ zugeordneten Positionszusatzinformation im Wesentlichen zum Zeitpunkt tbₙ₋₂ neu bestimmt, um eine verbesserte aktuelle Positionsinformation im Wesentlichen zum Zeitpunkt tbₙ₋₂ gültig für den Zeitpunkt taₙ₋₂ , erhalten zu haben. Die in Fig. 3 dargestellten Punkte A"2 (tbₙ₋₂) und A'2(tbₙ₋₁) geben die verbesserte Position der beweglichen Kommunikationseinrichtung 30 hinsichtlich der Zeitpunkte taₙ₋₁ bzw. taₙ₋₂ wieder. Die Berechnungen dieser Punkte A"2 (tbₙ₋₂) und A'2(tbₙ₋₁) können zusätzlich noch durch Verwendung von Bewegungsdaten und/oder Bewegungsmodelle zur Bewegungsänderung und/oder durch weitere nur vom GPS-Empfänger 34 bereitgestellten Positionsinformationen, die vor dem Zeitpunkt taₙ₋₁ bis zum Zeitpunkt taₙ₋₂ oder noch davor gelten, verbessert werden, wobei die dazugehörigen Daten zum Erfassungs- oder Berechnungszeitpunkt abgespeichert worden sein können. Solche Verbesserungen können möglichst frühzeitig oder spätestens zum Zeitpunkt tbₙ₋₁ durchgeführt werden.

Nunmehr sei angenommen, dass im Wesentlichen zum aktuellen Zeitpunkt tbₙ eine weitere, dem Zeitpunkt taₙ zugeordnete Positionszusatzinformation der mobilen Kommunikationseinrichtung 30 zur Verfügung steht. Zudem wurde zum Zeitpunkt taₙ vom GPS-Empfänger 34 eine Positionsinformation Aᵢₛₜ(taₙ) mit Fehlerellise E1 bestimmt. Weiterhin sei angenommen, dass der Bewegungssensor 33 die Bewegung der mobilen Kommunikationseinrichtung 30 zwischen den Zeitpunkten taₙ₋₂ und tbₙ erfasst hat. Die dazugehörenden Bewegungsdaten können im Datenspeicher 31 abgelegt sein.

Im Wesentlichen zum Zeitpunkt tbₙ liest die Steuereinrichtung 38 die erforderlichen Daten aus dem Datenspeicher 31 aus und bestimmt unter Anwendung eines geeigneten, im Programmspeicher 32 hinterlegten Algorithmus eines mathematischen Modells eine dem ersten Zeitpunkt taₙ zugeordnete Positionsinformation in Abhängigkeit von der dem ersten Zeitpunkt zugeordneten Positionsinformation, welche vom GPS-Empfänger 34 bereitgestellt worden ist, und von der dem ersten Zeitpunkt taₙ zugeordneten Positionszusatzinformation neu. In Abhängigkeit von der für den Zeitpunkt taₙ neubestimmten Positionsinformation, den zwischen dem ersten Zeitpunkt taₙ₋₂ und dem zweiten Zeitpunkt tbₙ bestimmten Bewegungsdaten und/oder Bewegungsmodellen und/oder Modellen zur Bewegungsänderung und/oder in Abhängigkeit von weiteren nur vom GPS-Empfänger 34 bereitgestellten Positionsinformationen und den bestmöglich verbesserten Positionsinformationen zu den Zeitpunkten taₙ₋₁ und taₙ₋₂, wird im Wesentlichen zum Zeitpunkt tbₙ eine gegenüber dem Punkt Aᵢₛₜ(taₙ) und seiner Fehlerellipse E1 verbesserte aktuelle Positionsinformation B2(tbₙ) mit Fehlerellipse E8 der beweglichen Kommunikationseinrichtung 30 in Echtzeit für den Zeitpunkt tbₙ ermittelt . Das Ergebnis einer beispielhaften Anwendung des Algorithmus auf die Eingangsgrößen, das sind vorzugsweise die in der Positionszusatzinformation enthaltenen Korrekturdaten und deren Genauigkeit, vorzugsweise die in der Positionsinformationen enthaltenen Positionskoordinaten und deren Genauigkeit zum Zeitpunkt taₙ, sowie die zwischen dem ersten Zeitpunkt taₙ und dem zweiten Zeitpunkt tbₙ bestimmten Bewegungsdaten, kann anhand der Fig. 3 illustriert werden. Als Zwischenergebnis dieses Verfahrens wird zum Zeitpunkt tbₙ noch der Punkt A2(tbₙ) mit Fehlerellipse E6 als Verbesserung des Punktes A1(tbₙ) mit Fehlerellipse E3 berechnet, wobei beide Punkte für den Zeitpunkt taₙ gültig sind.

Es ist wichtig darauf hinzuweisen, dass die Positionsbestimmung des Punktes A2(tbₙ) zwar erst zum Zeitpunkt tbₙ erfolgt, aber der Punkt A2(tbₙ) lediglich die verbesserte Position der mobilen Kommunikationseinrichtung 30 zum Zeitpunkt taₙ darstellt. Der Punkt A2(tbₙ) liegt daher in der Vergangenheit. Um den Punkt A2(tbₙ) ist wiederum beispielhaft eine berechnete Fehlerellipse gezeichnet. Wie aus Fig. 3 ersichtlich, kann das Verfahren, welches Daten aus der Vergangenheit mit berücksichtigt, eine genauere Position A2(tbₙ) als das hinsichtlich Fig. 2 beschriebene Verfahren liefern, welches die Position A1 (tbₙ) liefert.

Entsprechendes gilt analog für die Punkte B2(tbₙ) und B1(tbₙ). Die Linie 80, welche den Punkt A2(tbₙ) mit dem Punkt B2(tbₙ) verbindet, beschreibt beispielhaft die im Berechnungsverfahren geglättete relative Bewegung der mobilen Kommunikationseinrichtung 30 zwischen den Zeitpunkten taₙ und tbₙ. Der Pfeil zwischen dem Punkt B1(tbₙ) und dem Punkt B2(tbₙ) zeigt die Verbesserung des Verfahrens gegenüber dem Verfahren an, welches zuvor anhand der Fig. 2 erläutert wurde. Die verbesserte Positionsinformation des Punktes B2(tbₙ) kann wiederum im Datenspeicher 31 abgelegt werden, um für eine spätere, erneut durchzuführende Positionsbestimmung zur Verfügung zu stehen.

So ist denkbar, dass eine für wenigstens einen späteren ersten Zeitpunkt taₙ₊₁ gültige Positionszusatzinformation vom EGNOS-System 20 bereitgestellt wird und dass im Wesentlichen zu einem späteren zweiten tbₙ₊₁ die Positionszusatzinformation der beweglichen Kommunikationseinrichtung 30 zur Verfügung steht. Wiederum betrage die Differenz tbₙ₊₁-taₙ₊₁ etwa 6sec. Der GPS-Empfänger 34 bestimmt zu dem späteren ersten Zeitpunkt taₙ₊₁ eine Positionsinformation, die die Position der beweglichen Kommunikationseinrichtung zum Zeitpunkt taₙ₊₁ definiert. Zwischen den Zeitpunkten taₙ₊₁ und tbₙ₊₁ erfasst der Bewegungssensor 33 die Bewegung der mobilen Kommunikationseinrichtung 30. Die dazugehörenden Bewegungsdaten bzw. bewegungsbezogenen Informationen können wieder im Datenspeicher 31 abgelegt werden. Gegebenenfalls können die nur vom GPS-Empfänger 34 zwischen den Zeitpunkten taₙ₊₁ und tbₙ₊₁ bereitgestellten Positionsinformationen und aus Bewegungsmodellen gewonnene Bewegungsdaten als weitere bewegungsbezogene Informationen im Datenspeicher 31 abgelegt werden.

Im Wesentlichen zum Zeitpunkt tbₙ₊₁ liest die Steuereinrichtung 38 die erforderlichen Daten aus dem Datenspeicher 31 aus und bestimmt unter Anwendung eines geeigneten, im Programmspeicher 32 hinterlegten Algorithmus eines mathematischen Modells eine für den Zeitpunkt taₙ₊₁ gültige Positionsinformation beispielsweise in Abhängigkeit von der dem Zeitpunkt taₙ₊₁ zugeordneten Positionsinformation, welche vom GPS-Empfänger 34 bereitgestellt worden ist, und von der dem ersten Zeitpunkt taₙ₊₁ zugeordneten Positionszusatzinformation neu, und der Bewegungsdaten zwischen den Zeitpunkten taₙ und taₙ₊₁, und ermittelt basierend auf der für den Zeitpunkt taₙ₊₁ neu bestimmten Positionsinformation und beispielsweise in Abhängigkeit von den zwischen dem ersten Zeitpunkt taₙ₊₁ und dem zweiten Zeitpunkt tbₙ₊₁ bestimmten bewegungsbezogenen Informationen, und, sofern vorhanden, von den bestmöglich verbesserten Positionsinformationen zu den Zeitpunkten taₙ₋₁ und taₙ₋₂ und deren geometrischen Bezug zur Position gültig zum Zeitpunkt taₙ über die dazugehörigen Bewegungsdaten im Wesentlichen zum Zeitpunkt tbₙ₊₁ eine verbesserte aktuelle Positionsinformation der beweglichen Kommunikationseinrichtung 30 in Echtzeit gültig für den Zeitpunkt tbₙ₊₁. Die mathematischen Modelle hierzu sind dem Fachmann bekannt.

Dieses Verfahren kann zu späteren Zeitpunkten tbₙ₊ₖ für die Zeiträume taₙ₊ₖ bis tbₙ₊ₖ wiederholt auf die im Datenspeicher 31 gespeicherten Daten, das sind insbesondere bereits verbesserte Positionsinformationen, Positionszusatzinformation und Bewegungsdaten und Parameter zur Definition der Bewegungsmodelle, angewandt werden.

An dieser Stelle sei angemerkt, dass der verwendete Begriff "Zeitpunkt" und die dazugehörenden Bezeichnungen taₙ und tbₙ nicht einschränkend zu verstehen sind, dass das oben erläuterte Verfahren nur zu diskreten Zeitpunkten durchgeführt werden kann, wie dies lediglich der einfacheren Darstellung in den Fig. 2 und 3 gezeigt ist. Das Verfahren bzw. der Algorithmus kann auch kontinuierlich von der mobilen Kommunikationseinrichtung 30 ausgeführt werden. Zudem können auch bei Zwischenzeiträumen mit teilweisen oder vollständigen Datenlücken, beispielsweise durch Nutzung von Bewegungsmodellen für die Kommunikationseinrichtung 30, kontinuierlich die verbesserten Positionsinformationen in Echtzeit berechnet werden.

Wir betrachten nunmehr ein weiteres Szenario, bei dem ein Vorhersagealgorithmus verwendet wird, um Positionszusatzinformationen mit Hilfe der Interpolation oder der Extrapolation vorherzusagen. Die Vorhersagealgorithmen können in der beweglichen Kommunikationseinrichtung 30 oder zweckmäßiger Weise in dem EGNOS-Navigationsergänzungssystem 20 implementiert sein und zur Schließung von Datenlücken genutzt werden.

Angenommen sei nunmehr, dass das EGNOS-System 20 zu einem Zeitpunkt taₙ nicht nur eine dem ersten Zeitpunkt taₙ zugeordnete Positionszusatzinformation bereitstellt, sondern beispielsweise drei Positionszusatzinformationen vorhersagt, die jeweils einem dritten Zeitpunkt taₙ₊₁, taₙ₊₂ bzw. taₙ₊₃ zugeordnet werden. Die Zeitpunkte taₙ₊₁, taₙ₊₂ und taₙ₊₃ liegen vor einem zweiten Zeitpunkt tbₙ, zu dem die aktuelle Position der mobilen Bewegungseinrichtung 30 verbessert bestimmt werden soll. Sowohl die dem ersten Zeitpunkt taₙ zugeordnete Positionszusatzinformation als auch die drei vorhergesagten Positionszusatzinformationen werden im Wesentlichen zum Zeitpunkt taₙ von dem EGNOS-System 20 erzeugt und danach zur mobilen Kommunikationseinrichtung 30 übertragen und stehen dort im Wesentlichen zum Zeitpunkt tbₙ der mobilen Kommunikationseinrichtung 30 zur Verfügung. Alle Positionszusatzinformationen können zusammen mit den ihnen zugeordneten Zeitpunkten im Datenspeicher 31 gespeichert werden. Ferner sei angenommen, dass auch die vom GPS-Empfänger 34 zu den Zeitpunkten taₙ₊₁, taₙ₊₂ und taₙ₊₃ bestimmten Positionsinformationen und die vom Bewegungssensor 33 bestimmten Bewegungsdaten, die zwischen den Zeitpunkten taₙ und tbₙ erfasst worden sind, im Datenspeicher 31 abgelegt sind. Der Mikroprozessors 38 ist dazu ausgebildet, ein im Programmspeicher 32 abgelegtes Programm auszuführen, um die den Zeitpunkten taₙ₊₁, taₙ₊₂ und taₙ₊₃ zugeordneten Positionsinformationen mittels der jeweiligen Positionszusatzinformationen, welche den Zeitpunkten taₙ₊₁, taₙ₊₂ und taₙ₊₃ zugeordnet sind, zu korrigieren. Anschließend oder zeitgleich wird die dem ersten Zeitpunkt taₙ zugeordnete Positionsinformation in Abhängigkeit von den korrigierten, den Zeitpunkten taₙ₊₁, taₙ₊₂ und taₙ₊₃ zugeordneten Positionsinformationen, von der dem Zeitpunkt taₙ zugeordneten Positionszusatzinformation und von den Bewegungsdaten und Bewegungsmodellen, sofern vorhanden, neu bestimmt, um eine verbesserte aktuelle Positionsinformation der beweglichen Kommunikationseinrichtung 30 in Echtzeit im Wesentlichen zum Zeitpunkt tbₙ und gültig für den Zeitpunkt tbₙ zu erhalten. Alternativ kann auch anschließend oder zeitgleich wie im vorher beschriebenen Verfahren mit den nur vom GPS-Empfänger 34 bereitgestellten Positionsinformationszwischenwerten vorgegangen werden, wobei nun die Positionsinformationen durch die Inter- oder Extrapolationswerte der Positionszusatzinformationen vorab verbessert werden können.

Obwohl in Verbindung mit den Figuren 2 und 3 nur von Fehlerellipsen als 2-dimensionale Genauigkeitsmaße gesprochen wurde, beschränken sich die Verfahren nicht auf Normalverteilte Messgrößen und die entsprechenden Schätzverfahren.

Die Darstellungen nach Fig. 2 und Fig. 3 zeigen eine in den Größenordnungen und möglichen Fehlersituationen plausible Verbesserung durch einige der Verfahren der Erfindung für GPS im Zusammenspiel mit EGNOS und einem Bewegungsmesser für Translationen auf. Die von einem in einem handelsüblichen Smartphone eingebauten GPS-Empfänger ohne differentiellem GPS berechneten Positionen haben oft eine Standardabweichung von 10 Meter und die korrespondierenden EGNOS-korrigierten GPS Positionen haben oft eine Standardabweichung von 2 Meter, wobei die EGNOS Positionszusatzdaten beim Eintreffen in das Smartphone 30 zum Beispiel 6 sec veraltet sind. Der im Smartphone verwendete Bewegungssensor 33 liefere beispielsweise eine im Wesentlichen nur translationsabhängige kurzzeitstabile Genauigkeit in jeder Koordinatenrichtung von 10 % der zurückgelegten Strecke in Koordinatenrichtung.

Es wird nunmehr ein Zahlenbeispiel für einen speziellen Anwendungsfall angegeben, der in der Größenordnung auch das Beispiel in Fig. 2 genähert repräsentiert. Angenommen sei, dass das Smartphone 30 sich kontinuierlich mit Fußgängergeschwindigkeit 2 m/sec nur horizontal in X-Richtung bewege und die Bewegung in den anderen Koordinatenrichtungen vernachlässigbar sei. Der Zeitversatz der vom EGNOS System 20 übertragenen Korrekturdaten beträgt 6 Sekunden. Die GPS Positionsgenauigkeit in der Horizontalebene betrage ohne EGNOS Korrekturen 10 Meter (siehe Fehlerellipse E1 in Fig. 2). Wird nachträglich eine zuvor beschriebene Korrektor mit Hilfe der EGNOS Korrekturdaten durchgeführt, betrage die Positionsgenauigkeit 2 m (siehe Fehlerellipse E3 des Punktes A1(tbₙ) in Fig. 2). Die nur aus dem internen Bewegungssensor 33 berechnete Ablage (siehe Linie 60 in Fig. 2) von 12[m]=2[m/sec]*6[sec] in X-Richtung zwischen den Zeitpunkten taₙ und tbₙ kann somit in Echtzeit für den zweiten Zeitpunkt tbₙ mit einer Genauigkeit von 1,2[m]=0,1*12[m] berechnet werden. Die in Echtzeit für den zweiten Zeitpunkt tbₙ ermittelbare Genauigkeit (Ellipse E4 in Fig. 2) der verbesserten Position B1(tbₙ) - berechnet aus der mit EGNOS verbesserten Position für den ersten Zeitpunkt taₙ und addiert um die Ablage - gültig für Zeitpunkt tbₙ, folgt unter Nutzung der EGNOS Korrekturen, welche für den ersten, früheren Zeitpunkt taₙ der Vergangenheit gültig sind, zu ca. 2,33 m in X-Richtung. Die Genauigkeit in Meter kann mittels der Fehlerfortpflanzung Normalverteilter Werte genähert aus 2,33=Wurzel(5,44)=Wurzel(2*2+1,2*1,2) berechnet werden.

Der Genauigkeitswert von 2,33m in X-Richtung ist wesentlich besser als der Genauigkeitswert von 10m, der zum Zeitpunkt tbₙ aus Positionsinformationen, die nur vom GPS-Empfänger 34 bereitgestellt werden, erhalten wird.

Da gemäß Annahme in Y- und Z-Richtung keine statistisch signifikante Bewegung der beweglichen Kommunikationseinrichtung 30 stattgefunden hat, würde in diesen Richtungen durch Anwendung des oben beschriebenen Verfahrens jeweils ein Genauigkeitswert von 2m anstatt von 10m geliefert werden. Die Absolutwerte für die Position werden dann durch einfache Vektoraddition der Ablage von (dx;dy;dz)=(12m;0m;0m) in Echtzeit und gültig für den zweiten Zeitpunkt tbₙ ermittelt. In diesem Beispiel wurde vereinfachend vorausgesetzt, dass die Fehlerbestimmung des Bewegungssensors 33 nur von der zurückgelegten Strecke und nicht von der Zeit abhängig ist. Außerdem wurden die möglichen zusätzlichen weiteren Verbesserungen wie vorstehend beschrieben nicht berechnet. Die Genauigkeitswerte repräsentieren hier beispielhaft und genähert die Standardabweichung der Normalverteilung.

Ein weiteres numerisches Beispiel für GPS und EGNOS sei ein in einem Fahrzeug eingebauter GPS-Empfänger mit identischer Qualität zum GPS-Empfänger im Smartphone. Angenommen sei, dass das Fahrzeug sich mit 50 km/h exakt in X-Richtung bewege. Ein System von Bewegungssensoren liefere eine Genauigkeit von 2 % in Koordinatenrichtung. Die Ablage beträgt (dx=13,89*6=83,33;dy=0;dz=0) und die Standardabweichung der Ablagegenauigkeit beträgt dann (sx=0,02*13,89[m/sec]*6[sec] ;sy=0;sz=0)=(1,67m;0m;0m), wodurch sich die Positionsgenauigkeit in Echtzeit durch das Verfahren der Erfindung verbessert von (10m;10m;10m) auf (2,60m;2m;2m). Die Standardabweichung in X-Richtung mit 2,60m folgt genähert aus der Formel Wurzel(2*2+1,67*1,67).

Einige Aspekte der Erfindung werden nachfolgend noch einmal zusammenfassend in Verbindung mit den Figuren illustriert.

Um die aktuelle Position der beweglichen Kommunikationseinrichtung 30 in Echtzeit für einen gültigen Zeitpunkt tbₙ verbessert bestimmen zu können, werden folgende Verfahrensschritte ausgeführt:
a) Bereitstellen von Positionszusatzinformation durch ein Navigations-Ergänzungssystem 20;
b) Empfangen einer, einem ersten Zeitpunkt taₙ zugeordneten Positionszusatzinformation in der beweglichen Kommunikationseinrichtung 30, deren aktuelle Position für einen zweiten, späteren Zeitpunkt tbₙ in Echtzeit bestimmt werden soll, wobei der erste Zeitpunkt taₙ vor dem zweiten Zeitpunkt tbₙ liegt;
c) Bereitstellen, in der beweglichen Kommunikationseinrichtung 30, einer Positionsinformation, die dem ersten Zeitpunkt taₙ zugeordnet sind;
d) Bereitstellen, in der beweglichen Kommunikationseinrichtung 30, von bewegungsbezogenen Informationen, wobei die bewegungsbezogenen Informationen die Bewegung der beweglichen Kommunikationseinrichtung 30 zumindest abschnittsweise zwischen dem ersten Zeitpunkt taₙ und dem zweiten Zeitpunkt tbₙ beschreiben; und
e) Neubestimmen in der beweglichen Kommunikationseinrichtung 30 einer Positionsinformation für den ersten Zeitpunkt taₙ in Abhängigkeit von der in Schritt c) bereitgestellten, dem ersten Zeitpunkt taₙ zugeordneten Positionsinformation und der dem ersten Zeitpunkt taₙ zugeordneten Positionszusatzinformationen und Ermitteln in der beweglichen Kommunikationseinrichtung 30 einer verbesserten aktuellen Positionsinformation der beweglichen Kommunikationseinrichtung 30 für den zweiten Zeitpunkt tbₙ in der Abhängigkeit von der für den ersten Zeitpunkt taₙ neubestimmten Positionsinformation und den in Schritt d) bereitgestellten bewegungsbezogenen Informationen.

Angemerkt sei, dass der Index "n" eine Zahl größer oder gleich 1 definieren kann, die einen n-ten ersten Zeitpunkt und einen n-ten zweiten Zeitpunkt kennzeichnet. In diesem Sinne zeigt der Index "n" an, dass ein erster Zeitpunkt taₙ und ein dazugehörender zweiter Zeitpunkt tbₙ die zeitlichen Grenzen eines n-ten Bearbeitungs- bzw. Berechnungsintervalls definieren.

In Echtzeit bedeutet im Rahmen der Erfindung vorzugsweise, dass die aktuelle Positionsinformation, gültig für den zweiten Zeitpunkt tbₙ, im Wesentlichen zu dem zweiten Zeitpunkt tbₙ, bestimmt wird.

Angemerkt sei, dass es sich bei den in Schritt c) bereitgestellten Positionsinformationen vorzugsweise um Positionsinformationen handelt, welche mit Hilfe von Positionszusatzinformationen, die den gleichen Gültigkeitszeitpunkt wie die jeweiligen Positionsinformationen besitzen, korrigiert werden können.

Die Formulierung, dass die Positionszusatzinformation und die Positionsinformation einem ersten Zeitpunkt taₙ zugeordnet sind, bedeutet vorzugsweise, dass die Positionszusatzinformation und die Positionsinformation zum gleichen ersten Zeitpunkt taₙ gültig sind. Die in Schritt e) ermittelte aktuelle Positionsinformation ist vorzugsweise für den zweiten Zeitpunkt tbₙ gültig.

Bewegungsbezogene Informationen können beispielsweise kontinuierlich oder lückenhaft bereitgestellte Bewegungsinformationen und/oder Daten eines Bewegungsmodells zur Beschreibung von plausiblen Bewegungen und/oder Bewegungsänderungen enthalten.

Die bewegungsbezogenen Informationen können beispielsweise Bewegungsdaten, welche von wenigstens einer in der mobilen Kommunikationseinrichtung 30 implementierten Bewegungserfassungseinrichtung 33 bereitgestellt werden, und/oder Positionsinformationen, welche von einer in der mobilen Kommunikationseinrichtung 30 implementierten Empfangseinrichtung 34, welche zum Empfangen von Positionierungssignalen ausgebildet ist, bereitgestellt werden, und/oder Bewegungsmodelle für Bewegungen und/oder Bewegungsänderungen enthalten. Alle bewegungsbezogenen Informationen werden vorab vor der Schätzung der Zielgrößen nicht mit Hilfe von Positionszusatzinformationen korrigiert, sofern nicht extrapolierte Positionszusatzinformationen für nach dem Zeitpunkt taₙ vorliegen, was hier im einfachen Fall noch vorerst angenommen wird. Im weiteren Text wird auch diese Extrapolation beschrieben und zur Verbesserung genutzt.

Bei einer lückenhaften Bereitstellung von Bewegungsdaten können entsprechende Bewegungsmodelle diese Lücken schließen. Liegen Bewegungsdaten lückenhaft vor, so können bewegungsbezogene Informationen neben den lückenhaft vorliegenden Bewegungsdaten auch die durch ein Bewegungsmodell gelieferten, die Lücken schließenden Daten enthalten und/oder im Auswerteprozess zu berechnen ermöglichen. Ein einfaches Bewegungsmodell könnte vorsehen, dass der letzte Geschwindigkeitsvektor während einer Lücke, d.h. bei fehlenden Bewegungsdaten beibehalten wird. Kompliziertere Bewegungsmodelle nutzen zum Beispiel Extrapolationen von Geschwindigkeiten. Geeignete Bewegungsmodelle können auch durch einen Kalman Filter realisiert werden.

Bewegungsbezogene Informationen beschreiben vorzugsweise eine translatorische Bewegung der beweglichen Kommunikationseinrichtung 30.

Vorteilhafterweise umfasst Schritt e) folgende Schritte: Neubestimmen, für den ersten Zeitpunkt taₙ, der dem ersten Zeitpunkt taₙ zugeordneten Positionsinformation in Abhängigkeit von der dem ersten Zeitpunkt taₙ zugeordneten Positionszusatzinformationen und Ermitteln in Abhängigkeit von der für den ersten Zeitpunkt taₙ neubestimmten Positionsinformation und in Abhängigkeit von den in Schritt d) bereitgestellten bewegungsbezogenen Informationen eine verbesserte aktuelle Positionsinformation der beweglichen Kommunikationseinrichtung 30 in Echtzeit für den Zeitpunkt tbₙ.

Um ein flexibles Verfahren zur Verfügung stellen zu können, welches zum Beispiel auf Systemfehler und die Bewegung der mobilen Kommunikationseinrichtung 30 entsprechend reagieren kann, wird vorzugsweise vor Durchführung des Schrittes e) geprüft wird, ob in der beweglichen Kommunikationseinrichtung 30 zum Zeitpunkt tbₙ eine dem ersten Zeitpunkt taₙ zugeordnete Positionszusatzinformation vorliegt und ob sich die bewegliche Kommunikationseinrichtung zwischen dem ersten Zeitpunkt taₙ und dem zweiten Zeitpunkt tbₙ bewegt hat. Eine Bewegung kann beispielsweise dadurch festgestellt werden, dass mittels eines Hypothesentests berechnet wird, ob die Summe der translatorischen Bewegungen der beweglichen Kommunikationseinrichtung 30 statistisch signifikant ungleich dem Nullvektor ist.
Schritt e) wird ausgeführt, wenn eine Bewegung festgestellt worden ist. Wenn sich die bewegliche Kommunikationseinrichtung zwischen dem ersten Zeitpunkt taₙ und dem zweiten Zeitpunkt tbₙ bewegt hat, aber keine dem ersten Zeitpunkt taₙ zugeordnete Positionszusatzinformation vorliegt, wird eine verbesserte aktuelle Positionsinformation der beweglichen Kommunikationseinrichtung 30 für den zweiten Zeitpunkt tbₙ in Abhängigkeit von der dem ersten Zeitpunkt taₙ zugeordneten Positionsinformation und in Abhängigkeit von den in Schritt d) bereitgestellten bewegungsbezogenen Informationen in Echtzeit ermittelt.
Wenn die dem ersten Zeitpunkt taₙ zugeordnete Positionszusatzinformation vorliegt, sich die bewegliche Kommunikationseinrichtung zwischen dem ersten Zeitpunkt taₙ und dem zweiten Zeitpunkt tbₙ aber nicht oder im Wesentlichen nicht bewegt hat, wird eine verbesserte aktuelle Positionsinformation der beweglichen Kommunikationseinrichtung für den zweiten Zeitpunkt tbₙ in Abhängigkeit von der dem ersten Zeitpunkt taₙ zugeordneten Positionsinformation und in Abhängigkeit von der dem ersten Zeitpunkt taₙ zugeordneten Positionszusatzinformation ermittelt. Mit dem Merkmal "im Wesentlichen nicht bewegt hat" soll zweckmäßiger Weise zum Ausdruck gebracht werden, dass die Bewegung der beweglichen Kommunikationseinrichtung 30 in Summe statistisch signifikant den Nullvektor ergibt.

Vorteilhafter Weise enthält jede von der mobilen Kommunikationseinrichtung 30 bereitgestellte Positionsinformation Positionskoordinaten der beweglichen Kommunikationseinrichtung 30 und gegebenenfalls die Genauigkeiten der Positionskoordinaten, so dass in Schritt e) die verbesserten aktuellen Positionskoordinaten und gegebenenfalls deren verbesserte aktuelle Genauigkeit in Echtzeit für den Zeitpunkt tbₙ ermittelt werden können.

Um eine spätere aktuelle Position der beweglichen Kommunikationseinrichtung 30 zum Beispiel gültig zum Zeitpunkt tbₙ₊ₖ in Echtzeit noch genauer bestimmen zu können, können die Schritte b) bis e) jeweils zu wenigstens einem späteren, ersten Zeitpunkt taₙ₊ₖ und zu wenigstens einem späteren, zweiten Zeitpunkten tbₙ₊ₖ erneut durchgeführt werden, wobei jeweils bei Ausführung des Schrittes e) auch die bereits zu den vorherigen zweiten Zeitpunkten tbₙ₊ₖ₋ₓ jeweils ermittelten Positionsinformationen zur Ermittlung der aktuellen Positionsinformation der beweglichen Kommunikationseinrichtung für den jeweiligen zweiten Zeitpunkt tbₙ₊ₖ in Echtzeit, also im Wesentlichen zum jeweiligen zweiten Zeitpunkt tbₙ₊ₖ, mit verwendet werden können. Mit x wird ein Element aus {1, 2, 3,..., k) bezeichnet.

In Schritt e) können bei der Ermittlung der aktuellen Positionsinformation der beweglichen Kommunikationseinrichtung 30 für den jeweiligen zweiten Zeitpunkt tbₙ₊ₖ auch Modelle genutzt werden, die mögliche Bewegungen und Bewegungsänderungen der beweglichen Kommunikationseinrichtung 30 beschreiben. In Schritt e) können auch die bewegungsbezogenen Informationen und zusätzliche Positionsinformationen, welche zum Beispiel vom GPS-Empfänger 34 zwischen den jeweiligen Zeitpunkten bereitgestellt werden, genutzt werden, um eine zusätzliche Verbesserung der aktuellen Positionsinformation in Echtzeit zu erhalten.

Angemerkt sei, dass k eine natürliche Zahl ist, um den Fortschritt im Index n mit n+k zu beschreiben.

Der Index "n+k" zeigt an, wie viele (k) spätere erste und zweite Zeitpunkte bezüglich des ersten Zeitpunktes taₙ bzw. des zweiten Zeitpunktes tbₙ betrachtet werden sollen. Der Index "x" gibt die Anzahl an zweiten Zeitpunkten bzw. die Anzahl an Positionsinformationen zu verschiedenen früheren zweiten Zeitpunkten an, die vor dem zweiten Zeitpunkt tbₙ₊ₖ liegen und bei der Ermittlung der aktuellen Positionsinformation der beweglichen Kommunikationseinrichtung im Wesentlichen zum zweiten Zeitpunkt tbₙ₊ₖ mit verwendet werden sollen.

Um die aktuelle Position der beweglichen Kommunikationseinrichtung 30 in Echtzeit, also im Wesentlichen zum Zeitpunkt tbₙ noch genauer bestimmen zu können, können die Schritte b) bis e) jeweils zu wenigstens einem früheren ersten Zeitpunkt taₙ₋ₚ und zu wenigstens einem früheren zweiten Zeitpunkten tbₙ₋ₚ, wiederholt bzw. erneut durchgeführt worden sein, wobei bei Ausführung des Schrittes e) auch die bereits zu den früheren zweiten Zeitpunkten tbₙ₋ₚ neubestimmten Positionsinformationen zur Neubestimmung der aktuellen Positionsinformation der beweglichen Kommunikationseinrichtung im Wesentlichen zum zweiten Zeitpunkt tbₙ mit verwendet werden können.

Angemerkt sei, dass der Index p eine natürliche Zahl ist. Der Index "p" gibt die Anzahl an Paaren der ersten und zweiten Zeitpunkte an, die vor dem ersten Zeitpunkt taₙ bzw. vor dem zweiten Zeitpunkt tbₙ liegen, und die zu diesen Zeitpunkten jeweils dazu gehörenden Positionsinformationen, Positionszusatzinformationen und/oder Bewegungsdaten an, die bei der Neubestimmung der dem Zeitpunkt taₙ zugeordneten Positionsinformation im Wesentlichen zum zweiten Zeitpunkt tbₙ mit verwendet werden sollen. In Schritt e) können bei der Ermittlung der aktuellen Position zusätzlich auch Modelle genutzt werden, die mögliche Bewegungen und Bewegungsänderungen der beweglichen Kommunikationseinrichtung 30 beschreiben. In Schritt e) können auch die bewegungsbezogenen Informationen und/oder zusätzliche Positionsinformationen, die beispielsweise vom GPS-Empfänger 34 zwischen den Zeitpunkten bereitgestellt werden, genutzt werden, um eine zusätzliche Verbesserung der Positionsinformationen zu erhalten.

Die aktuelle Position der beweglichen Kommunikationseinrichtung 30 kann für einen zweiten Zeitpunkt tbₙ noch präziser bestimmt werden, wenn
in Schritt a) zusätzlich wenigstens eine Positionszusatzinformation, der jeweils ein dritter Zeitpunkt zugeordnet wird, vorhergesagt wird, wobei der wenigstens eine dritte Zeitpunkt zwischen dem jeweiligen ersten Zeitpunkt taₙ und dem jeweiligen zweiten Zeitpunkt tbₙ liegt, dass
in Schritt b) auch die wenigstens eine vorhergesagte Positionszusatzinformation von der beweglichen Kommunikationseinrichtung empfangen wird, dass
in Schritt c) Positionsinformationen, die dem wenigstens einen dritten Zeitpunkt zugeordnet sind, bereitgestellt werden; und dass
Schritt e) folgende Schritte umfasst:
   - Korrigieren, in der beweglichen Kommunikationseinrichtung, der in Schritt c) bereitgestellten Positionsinformationen, welche dem wenigstens einen dritten Zeitpunkt zugeordnet sind, in Abhängigkeit von der dem jeweiligen dritten Zeitpunkt zugeordneten Positionszusatzinformation und/oder in Abhängigkeit von den zum jeweiligen dritten Zeitpunkt vorliegenden bewegungsbezogenen Informationen, und
   - Ermitteln einer verbesserten aktuellen Positionsinformation der beweglichen Kommunikationseinrichtung für den jeweiligen zweiten Zeitpunkt tbₙ in Abhängigkeit von der dem jeweiligen ersten Zeitpunkt taₙ zugeordneten Positionsinformation und in Abhängigkeit von der wenigstens einen korrigierten Positionsinformation des jeweiligen dritten Zeitpunktes in Echtzeit.

In Schritt e) können bei der Ermittlung der aktuellen Positionsinformation der beweglichen Kommunikationseinrichtung 30 für den jeweiligen zweiten Zeitpunkt tbₙ₊ₖ auch Modelle genutzt werden, die mögliche Bewegungen und Bewegungsänderungen der beweglichen Kommunikationseinrichtung 30 beschreiben. In Schritt e) können auch die bewegungsbezogenen Informationen und zusätzliche Positionsinformationen, welche zum Beispiel vom GPS-Empfänger 34 zwischen den jeweiligen Zeitpunkten bereitgestellt werden, genutzt werden, um eine zusätzliche Verbesserung der aktuellen Positionsinformation in Echtzeit zu erhalten.

Zweckmäßiger Weise wird Schritt a) in dem Navigations-Ergänzungssystem 20 und/oder in der beweglichen Kommunikationseinrichtung 30 ausgeführt.

Die vom Navigations-Ergänzungssystem bereitgestellten Positionszusatzinformationen können Korrekturwerte und/oder Funktionen zur Berechnung von Korrekturwerten, gegebenenfalls die Genauigkeiten der Korrekturwerte und gegebenenfalls systembedingte Integritätsdaten enthalten.

Bei dem Navigations-Ergänzungssystem handelt es sich beispielsweise um ein SBAS (Satellite Based Augmentation)-System, insbesondere um das in Europa eingesetzte EGNOS-System.

Das Verfahren kann noch genauere Positionsinformationen für die aktuelle Position der beweglichen Kommunikationseinrichtung 30 liefern, je geringer die Korrelation zwischen den in Schritt c) bereitgestellten Positionsinformation und den in Schritt d) bereitgestellten bewegungsbezogenen Informationen ist und/oder je höher der Genauigkeitssprung durch die Positionszusatzinformationen sein wird, und/oder je besser die Genauigkeiten der bewegungsbezogenen Informationen im Vergleich zu den Genauigkeiten der Positionsinformationen sind, die nur vom beispielhaften GPS-Empfänger 34 bereitgestellt werden. Die physikalische Korrelation der Bestimmungsmethoden ist Null, wenn die in Schritt c) bereitgestellten Positionsinformationen von einem Empfänger 34 bereitgestellt werden, der diese Positionsinformationen aus Positionssignalen eines Navigationssystems 40 gewinnt, und die in Schritt d) bereitgestellten bewegungsbezogenen Informationen nur von wenigstens einem separaten speziellen Bewegungssensor 33, z. B. einem autarken Beschleunigungsmesser, bereitgestellt werden. Wie bereits beispielhaft erläutert, können das Navigationssystem 40 ein GPS-System und der Empfänger 34 ein GPS-Empfänger sein.

Ferner wird eine bewegliche Kommunikationseinrichtung 30 zur verbesserten Bestimmung ihrer aktuellen Position für einen Zeitpunkt tbₙ in Echtzeit bereitgestellt. Sie weist folgende Merkmale auf:
eine erste Empfangseinrichtung 34, die dazu ausgebildet ist, Positionssignale von einem Navigationssystem 40 zu empfangen, um Positionsinformationen ermitteln zu können, welche die Position der beweglichen Kommunikationseinrichtung wenigstens für einen ersten Zeitpunkt taₙ definieren,
eine Bewegungserfassungseinrichtung 33 zum Bereitstellen von bewegungsbezogenen Informationen, welche die Bewegung der beweglichen Kommunikationseinrichtung 30 wenigstens abschnittsweise zwischen einem ersten Zeitpunkt taₙ und einem zweiten Zeitpunkt tbₙ beschreiben,
eine zweite Empfangseinrichtung 35, die dazu ausgebildet ist, von einem Navigations-Ergänzungssystem 20 bereitgestellte Positionszusatzinformationen zu empfangen, welche wenigstens einem ersten Zeitpunkt taₙ zugeordnet sind, wobei der jeweilige erste Zeitpunkt taₙ vor dem jeweiligen zweiten Zeitpunkt tbₙ liegt,
eine Steuereinrichtung 38, die dazu ausgebildet ist, eine Positionsinformation für den ersten Zeitpunkt taₙ in Abhängigkeit von der dem ersten Zeitpunkt taₙ zugeordneten Positionsinformation, welche von der ersten Empfangseinrichtung 34 bereitgestellt wird, und der dem ersten Zeitpunkt taₙ zugeordneten Positionszusatzinformationen, welche von der zweiten Empfangseinrichtung 35 bereitgestellt wird, neu zu bestimmen, und die ferner dazu ausgebildet ist, eine verbesserte aktuelle Positionsinformation für den zweiten Zeitpunkt tbₙ in Abhängigkeit von der für den ersten Zeitpunkt taₙ neubestimmten Positionsinformation und den von der Bewegungserfassungseinrichtung 33 bereitgestellten bewegungsbezogenen Informationen zu ermitteln. Die verbesserte aktuelle Positionsinformation ist dann für den zweiten Zeitpunkt tbₙ auch gültig.

Die zum zweiten Zeitpunkt tbₙ bereitgestellten bewegungsbezogenen Informationen sind diejenigen Informationen, die zwischen dem ersten Zeitpunkt taₙ und dem zweiten Zeitpunkt tbₙ bereitgestellt worden sind.

Angemerkt sei, dass bewegungsbezogene Informationen, also Informationen, die nicht mittels Positionszusatzinformationen korrigiert werden, auch von der ersten Empfangseinrichtung 34 bereitgestellte Positionsinformationen, und/oder Bewegungsdaten der Bewegungserfassungseinrichtung 33 und/oder Bewegungsmodelle für Bewegungsänderungen enthalten können.

Gemäß einer vorteilhaften Ausgestaltung kann die Steuereinrichtung 38 dazu ausgebildet sein, die dem ersten Zeitpunkt taₙ zugeordnete Positionsinformation in Abhängigkeit von der dem ersten Zeitpunkt taₙ zugeordneten Positionszusatzinformationen für den ersten Zeitpunkt taₙ neu zu bestimmen bzw. zu korrigieren und in Abhängigkeit von der für den ersten Zeitpunkt taₙ neubestimmten Positionsinformation und von den bereitgestellten bewegungsbezogenen Informationen eine verbesserte aktuelle Positionsinformation der beweglichen Kommunikationseinrichtung 30 in Echtzeit für den Zeitpunkt tbₙ zu ermitteln.

Vorzugsweise ist die erste Empfangseinrichtung 34 ein GNSS-Empfänger, zum Beispiel ein GPS-Empfänger, der eine Antenne 34b und einen GPS-Chip 34a aufweisen kann. Die zweite Empfangseinrichtung 35 kann ein SBAS-fähiger Empfänger sein, der zum Beispiel eine Antenne 35b und einen EGNOS-Chip 35a und/oder einen WAAS-Chip 35a aufweisen kann. Die erste Empfangseinrichtung 34 und die zweite Empfangseinrichtung 35 können zum Beispiel auch integriert in einem Chip vorliegen und beispielsweise eine Antenne für die Frequenz L1 teilen.

Vorzugsweise ist die Bewegungserfassungseinrichtung 33 ein Bewegungssensor, welcher dazu ausgebildet ist, bewegungsbezogene Informationen zur Berechnung einer translatorischen Bewegung wenigstens abschnittsweise zwischen dem ersten Zeitpunkt (taₙ) und dem zweiten Zeitpunkt (tbₙ), welche ein Bearbeitungsintervall definieren, zu erfassen und/oder zu bestimmen.

Um eine flexible mobile Kommunikationseinrichtung 30 zur Verfügung stellen zu können, welche zum Beispiel auf Systemfehler und die Bewegung der mobilen Kommunikationseinrichtung 30 entsprechend reagieren kann, weist sie vorzugsweise eine Prüfeinrichtung auf, die dazu ausgebildet ist, zu prüfen, ob in der beweglichen Kommunikationseinrichtung 30 zum Zeitpunkt tbₙ eine dem ersten Zeitpunkt taₙ zugeordnete Positionszusatzinformation vorliegt und ob sich die bewegliche Kommunikationseinrichtung 30 zwischen dem ersten Zeitpunkt taₙ und dem zweiten Zeitpunkt tbₙ zwischenzeitlich bewegt hat oder ob die Summe der translatorischen Bewegungen der beweglichen Kommunikationseinrichtung 30 von taₙ bis tbₙ im Wesentlichen statistisch signifikant den Nullvektor ergeben.
Die Steuereinrichtung 38 kann ferner dazu ausgebildet sein
a) eine verbesserte aktuelle Positionsinformation der beweglichen Kommunikationseinrichtung (30) in Echtzeit für den zweiten Zeitpunkt (tbₙ) in Abhängigkeit von der dem ersten Zeitpunkt (taₙ) zugeordneten Positionsinformation, von der dem ersten Zeitpunkt (taₙ) zugeordneten Positionszusatzinformation und von den zum zweiten Zeitpunkt (tbₙ) vorliegenden bewegungsbezogenen Informationen zu ermitteln, wenn eine Bewegung festgestellt worden ist, oder
b) eine verbesserte aktuelle Positionsinformation der beweglichen Kommunikationseinrichtung (30) in Echtzeit für den zweiten Zeitpunkt (tbₙ) in Abhängigkeit von der dem ersten Zeitpunkt (taₙ) zugeordneten Positionsinformation und von den zum zweiten Zeitpunkt (tbₙ) vorliegenden bewegungsbezogenen Informationen zu ermitteln, wenn sich die bewegliche Kommunikationseinrichtung (30) zwischen dem ersten Zeitpunkt (taₙ) und dem zweiten Zeitpunkt (tbₙ) bewegt hat, aber keine dem ersten Zeitpunkt (taₙ) zugeordnete Positionszusatzinformationen vorliegen, oder
c) eine verbesserte aktuelle Positionsinformation der beweglichen Kommunikationseinrichtung (30) in Echtzeit für den zweiten Zeitpunkt (tbₙ) in Abhängigkeit von der dem ersten Zeitpunkt (taₙ) zugeordneten Positionsinformation und von der dem ersten Zeitpunkt (taₙ) zugeordneten Positionszusatzinformation zu ermitteln, wenn die dem ersten Zeitpunkt (taₙ) zugeordnete Positionszusatzinformation vorliegt, sich die bewegliche Kommunikationseinrichtung zwischen dem ersten Zeitpunkt (taₙ) und dem zweiten Zeitpunkt (tbₙ) aber nicht oder im Wesentlichen nicht bewegt hat.

Die jeweilige Ermittlung der aktuellen Positionsinformation erfolgt vorzugsweise im Wesentlichen zum zweiten Zeitpunkt tbₙ.

Eine Bewegung liegt vorzugsweise dann vor, wenn sich die bewegliche Kommunikationseinrichtung 30 statistisch signifikant bewegt hat, d. h. eine Einzelbewegung oder die Summe aller Einzelbewegungen statistisch gesehen im Wesentlichen nicht dem Nullvektor entsprechen.

Die Ermittlung der aktuellen Positionsinformation für einen Zeitpunkt tbₙ kann weiter verbessert werden, wenn die bewegungsbezogenen Informationen zusätzlich Positionsinformationen oder nur Positionsinformationen enthalten, welche nur von der ersten Empfangseinrichtung 34 zwischen einem ersten Zeitpunkt taₙ und einem zweiten Zeitpunkt tbₙ bereitgestellt werden, wobei diese Positionsinformationen mit in die Berechnungen der aktuellen Positionsinformation in Echtzeit, also im Wesentlichen zum Zeitpunkt tbₙ und gültig für den Zeitpunkt tbₙ einfließen. Wie bereits betont, definieren der erste Zeitpunkt taₙ und der zweite Zeitpunkt tbₙ jeweils ein n-tes Bearbeitungsintervall.

Um die aktuelle Position präzise bestimmen zu können, ist es zweckmäßig, sicherzustellen, dass hinsichtlich aller Eingangsgrößen des Verfahrens, das sind insbesondere die vom Navigations-Ergänzungssystem 20 bereitgestellten Positionszusatzinformationen sowie die von der beweglichen Kommunikationseinrichtung 30 bereitgestellten Positionsinformationen und Bewegungsdaten ein eindeutiger Zeitbezug besteht. Das bedeutet, dass das Navigations-Ergänzungssystem 20, die bewegliche Kommunikationseinrichtung 30 und das GNSS-System 40 synchronisiert werden sollten.

Vorzugsweise werden alle Berechnungen in einem Guss, das heißt in einem einzigen Gleichungssystem, zur Bestimmung der aktuellen Position der beweglichen Kommunikationseinrichtung durchgeführt. Es sind aber auch Filtertechniken mit zum Beispiel sequentieller Ausgleichung und insbesondere KALMAN Techniken einsetzbar, wobei eine flexible Speicherung von Messdaten und Zwischenergebnissen hilfreich ist, um gezielte Rücksprünge und Neuberechnungen effektiv durchführen zu können.

Die beschriebenen Berechnungsvorschriften sind in der Lage, vorliegende unterschiedliche Datenlücken zu berücksichtigen und trotzdem ohne zeitliche Lücke kontinuierlich in Echtzeit die verbesserten Positionsinformationen für einen zweiten Zeitpunkt tbₙ zu bestimmen.

## Patentansprüche

1. Verfahren zur verbesserten Bestimmung der aktuellen Position einer beweglichen Kommunikationseinrichtung (30) in Echtzeit, mit folgenden Verfahrensschritten:
a1) Bereitstellen von Positionszusatzinformationen durch ein SBAS-Navigations-Ergänzungssystem (20) und Aussenden von Signalen durch ein GNSS-System (40);
a2) Übertragen einer, einem ersten Zeitpunkt (taₙ) zugeordneten Positionszusatzinformation zu einer beweglichen Kommunikationseinrichtung (30),
**gekennzeichnet durch**
b) Empfangen der, einem ersten Zeitpunkt (taₙ) zugeordneten Positionszusatzinformation in einer beweglichen Kommunikationseinrichtung (30), deren aktuelle Position für einen zweiten Zeitpunkt (tbₙ) in Echtzeit bestimmt werden soll, wobei der erste Zeitpunkt (taₙ) vor dem zweiten Zeitpunkt (tbₙ) liegt;
c) Empfangen von vom GNSS-System (40) ausgesendeten Signalen in der beweglichen Kommunikationseinrichtung (30) und Ermitteln, in der beweglichen Kommunikationseinrichtung (30), aus den empfangenen Signalen einer Positionsinformation, die dem ersten Zeitpunkt (taₙ) zugeordnet ist;
d) Erzeugen, mittels einer Bewegungserfassungseinrichtung (33) der beweglichen Kommunikationseinrichtung (30), bewegungsbezogener Informationen, wobei die bewegungsbezogenen Informationen die Bewegung der beweglichen Kommunikationseinrichtung (30) zumindest abschnittsweise zwischen dem ersten Zeitpunkt (taₙ) und dem zweiten Zeitpunkt (tbₙ) beschreiben;
e) Neubestimmen in der beweglichen Kommunikationseinrichtung (30) einer Positionsinformation für den ersten Zeitpunkt (taₙ) in Abhängigkeit von der in Schritt c) ermittelten, dem ersten Zeitpunkt (taₙ) zugeordneten Positionsinformation und der dem ersten Zeitpunkt (taₙ) zugeordneten Positionszusatzinformationen und Ermitteln in der beweglichen Kommunikationseinrichtung (30) einer verbesserten aktuellen Positionsinformation der beweglichen Kommunikationseinrichtung (30) für den zweiten Zeitpunkt (tbₙ) in der Abhängigkeit von der für den ersten Zeitpunkt (taₙ) neubestimmten Positionsinformation und den in Schritt d) erzeugten bewegungsbezogenen Informationen, wobei vor Durchführung des Schrittes e) geprüft wird, ob in der beweglichen Kommunikationseinrichtung (30) zum Zeitpunkt (tbₙ) eine dem ersten Zeitpunkt (taₙ) zugeordnete Positionszusatzinformation vorliegt und ob sich die bewegliche Kommunikationseinrichtung (30) zwischen dem ersten Zeitpunkt (taₙ) und dem zweiten Zeitpunkt (tbₙ) bewegt hat, indem mittels eines Hypothesentests berechnet wird, ob die Summe der translatorischen Bewegungen der beweglichen Kommunikationseinrichtung (30) statistisch signifikant ungleich dem Nullvektor ist.

2. Verfahren nach Anspruch 1,
**dadurch gekennzeichnet, dass**
die bewegungsbezogenen Informationen Bewegungsdaten, welche von einer in der beweglichen Kommunikationseinrichtung (30) implementierten Bewegungserfassungseinrichtung (33) bereitgestellt werden, und/oder Positionsinformationen, welche von einer in der beweglichen Kommunikationseinrichtung (30) implementierten Empfangseinrichtung (34), welche zum Empfangen von Positionierungssignalen ausgebildet ist, bereitgestellt werden, und/oder Bewegungsmodelle für Bewegungsänderungen enthalten.

3. Verfahren nach einem der vorstehenden Ansprüche, **dadurch gekennzeichnet, dass**
die Positionsinformationen Positionskoordinaten und gegebenenfalls deren Genauigkeit enthalten, und dass in Schritt e) die verbesserten aktuellen Positionskoordinaten und gegebenenfalls deren verbesserte aktuelle Genauigkeit in Echtzeit erhalten werden.

4. Verfahren nach einem der vorstehenden Ansprüche, **dadurch gekennzeichnet, dass**
die Schritte b) bis e) jeweils zu wenigstens einem späteren, ersten Zeitpunkt (taₙ₊ₖ) und zu wenigstens einem späteren, zweiten Zeitpunkten (tbₙ₊ₖ), erneut durchgeführt werden können, wobei jeweils bei Ausführung des Schrittes e) auch die bereits zu den vorherigen zweiten Zeitpunkten (tbₙ₊ₖ₋ₓ) jeweils ermittelten Positionsinformationen zur Ermittlung der aktuellen Positionsinformation der beweglichen Kommunikationseinrichtung für den jeweiligen zweiten Zeitpunkt (tbₙ₊ₖ) in Echtzeit im Wesentlichen zum jeweiligen zweiten Zeitpunkt (tbₙ₊ₖ) mit verwendet werden können.

5. Verfahren nach einem der vorstehenden Ansprüche, **dadurch gekennzeichnet, dass**
in Schritt a) zusätzlich wenigstens eine Positionszusatzinformationen, der jeweils ein dritter Zeitpunkt zugeordnet wird, vorhergesagt wird, wobei der wenigstens eine dritte Zeitpunkt zwischen dem jeweiligen ersten Zeitpunkt (taₙ) und dem jeweiligen zweiten Zeitpunkt (tbₙ) liegt, dass
in Schritt b) auch die wenigstens eine vorhergesagte Positionszusatzinformation von der beweglichen Kommunikationseinrichtung empfangen wird, dass
in Schritt c) Positionsinformationen, die dem wenigstens einen dritten Zeitpunkt zugeordnet sind, bereitgestellt werden; und dass
Schritt e) folgende Schritte umfasst:
- Korrigieren, in der beweglichen Kommunikationseinrichtung, der in Schritt c) bereitgestellten Positionsinformationen, welche dem wenigstens einen dritten Zeitpunkt zugeordnet sind, in Abhängigkeit von der dem jeweiligen dritten Zeitpunkt zugeordneten Positionszusatzinformation und/oder in Abhängigkeit von den zum jeweiligen dritten Zeitpunkt vorliegenden bewegungsbezogenen Informationen, und
- Ermitteln einer verbesserten aktuellen Positionsinformation der beweglichen Kommunikationseinrichtung für den jeweiligen zweiten Zeitpunkt (tbₙ) in Abhängigkeit von der dem jeweiligen ersten Zeitpunkt (taₙ) zugeordneten Positionsinformation und in Abhängigkeit von der wenigstens einen korrigierten Positionsinformation des jeweiligen dritten Zeitpunktes in Echtzeit.

6. Verfahren nach Anspruch 5,
**dadurch gekennzeichnet, dass**
Schritt a) in dem Navigations-Ergänzungssystem (20) und/oder in der beweglichen Kommunikationseinrichtung (30) ausgeführt wird.

7. Verfahren nach einem der vorstehenden Ansprüche, **dadurch gekennzeichnet, dass**
die Positionszusatzinformationen Korrekturwerte und/oder Funktionen zur Berechnung von Korrekturwerten, gegebenenfalls die Genauigkeiten der Korrekturwerte und gegebenenfalls systembedingte Integritätsdaten enthalten.

8. Verfahren nach einem der vorstehenden Ansprüche, **dadurch gekennzeichnet, dass**
die in Schritt c) ermittelten Positionsinformationen und die in Schritt d) erzeugten bewegungsbezogenen Informationen bezüglich ihrer Bestimmungsmethoden nicht physikalisch korreliert sind.

9. Bewegliche Kommunikationseinrichtung (30) zur verbesserten Bestimmung ihrer aktuellen Position in Echtzeit aufweisend:
eine erste Empfangseinrichtung (34), die dazu ausgebildet ist, Positionssignale von einem GNSS-Navigationssystem (40) zu empfangen, um Positionsinformationen ermitteln zu können, welche die Position der beweglichen Kommunikationseinrichtung für einen ersten Zeitpunkt (taₙ) definieren,
eine Bewegungserfassungseinrichtung (33) zum Bestimmen von bewegungsbezogenen Informationen, welche die Bewegung der beweglichen Kommunikationseinrichtung (30) wenigstens abschnittsweise zwischen einem ersten Zeitpunkt (taₙ) und einem zweiten Zeitpunkt (tbₙ) beschreiben,
**gekennzeichnet durch**
eine zweite Empfangseinrichtung (35), die dazu ausgebildet ist, von einem SBAS-Navigations-Ergänzungssystem (20) bereitgestellte Positionszusatzinformationen zu empfangen, welche einem ersten Zeitpunkt (taₙ) zugeordnet sind, wobei der erste Zeitpunkt (taₙ) vor dem zweiten Zeitpunkt (tbₙ) liegt,
eine Prüfeinrichtung, die dazu ausgebildet ist, zu prüfen, ob in der beweglichen Kommunikationseinrichtung (30) zum Zeitpunkt (tbₙ) eine dem ersten Zeitpunkt (taₙ) zugeordnete Positionszusatzinformation vorliegt und ob sich die bewegliche Kommunikationseinrichtung (30) zwischen dem ersten Zeitpunkt (taₙ) und dem zweiten Zeitpunkt (tbₙ) bewegt hat, indem mittels eines Hypothesentests berechnet wird, ob die Summe der translatorischen Bewegungen der beweglichen Kommunikationseinrichtung (30) statistisch signifikant ungleich dem Nullvektor ist,
eine Steuereinrichtung (38), die dazu ausgebildet ist, eine Positionsinformation für den ersten Zeitpunkt (taₙ) in Abhängigkeit von der dem ersten Zeitpunkt (taₙ) zugeordneten Positionsinformation, welche von der ersten Empfangseinrichtung (34) bereitgestellt wird, und der dem ersten Zeitpunkt (taₙ) zugeordneten Positionszusatzinformationen, welche von der zweiten Empfangseinrichtung (35) bereitgestellt wird, neu zu bestimmen, und die ferner dazu ausgebildet ist, eine verbesserte aktuelle Positionsinformation für den zweiten Zeitpunkt (tbₙ) in Abhängigkeit von der für den ersten Zeitpunkt (taₙ) neubestimmten Positionsinformation und den von der Bewegungserfassungseinrichtung (33) bestimmten bewegungsbezogenen Informationen zu ermitteln.

10. Bewegliche Kommunikationseinrichtung nach Anspruch 9, **dadurch gekennzeichnet, dass**
die erste Empfangseinrichtung (34) einen GPS-Empfänger und die zweite Empfangseinrichtung (35) einen SBASfähigen Empfänger, insbesondere einen EGNOS-Chip und/oder einen WAAS-Chip aufweist.

11. Bewegliche Kommunikationseinrichtung nach Anspruch 9 oder 10,
**dadurch gekennzeichnet, dass**
die Bewegungserfassungseinrichtung (33) einen Bewegungssensor aufweist, welcher dazu ausgebildet ist, bewegungsbezogene Informationen zur Berechnung einer translatorischen Bewegung wenigstens abschnittsweise zwischen dem ersten Zeitpunkt (taₙ) und dem zweiten Zeitpunkt (tbₙ) zu bestimmen.

12. Bewegliche Kommunikationseinrichtung nach einem der Ansprüche 9 bis 11,
**dadurch gekennzeichnet, dass**
die bewegungsbezogenen Informationen Bewegungsdaten, welche von der Bewegungserfassungseinrichtung (33) bereitgestellt werden, und/oder Positionsinformationen, welche von der ersten Empfangseinrichtung (34) bereitgestellt werden, und/oder Bewegungsmodelle für Bewegungsänderungen enthalten.

## Claims

1. A method for improved real time determination of the current position of a mobile communication device (30), comprising the method steps of:
a1) providing supplemental position information by an SBAS navigation augmentation system (20) and emitting signals by a GNSS system (40);
a2) transmitting supplemental position information associated with a first point in time (taₙ) to a mobile communication device (30);
**characterised by**
b) receiving the supplemental position information associated with a first point in time (taₙ) in a mobile communication device (30) whose current position is to be determined in real time for a second point in time (tbₙ), the first point in time (taₙ) being before the second point in time (tbₙ) ;
c) receiving signals emitted by the GNSS system (40) in the mobile communication device (30) and determining, in the mobile communication device (30) and from the received signals, position information associated with the first point in time (taₙ) ;
d) generating movement-related information, by a movement detection device (33) of the mobile communication device (30), the movement-related information describing the movement of the mobile communication device (30) at least section wise between the first point in time (taₙ) and the second point in time (tbₙ) ;
e) re-determining, in the mobile communication device (30), position information for the first point in time (taₙ) on the basis of the position information determined in step c) and associated with the first point in time (taₙ), and determining, in the mobile communication device (30), improved current position information of the mobile communication device (30) for the second point in time (tbₙ) on the basis of the position information re-determined for the first point in time (taₙ) and the movement-related information generated in step d); wherein
before executing step e), it is checked whether at time (tbₙ) supplemental position information associated with the first point in time (taₙ) is available in the mobile communication device (30) and whether the mobile communication device (30) has moved between the first point in time (taₙ) and the second point in time (tbₙ), by employing a hypothesis test to calculate whether the sum of translational movements of the mobile communication device (30) is different from the zero vector with statistical significance.

2. The method according to claim 1,
**characterised in that**
the movement-related information comprises movement data provided by a movement detection device (33) which is implemented in the mobile communication device (30), and/or position information provided by a receiving device (34) which is implemented in the mobile communication device (30) and adapted to receive positioning signals, and/or comprises movement models for movement changes.

3. The method according to any one of the preceding claims, **characterised in that**
the position information comprises position coordinates and optionally an accuracy thereof; and that
in step c) the improved current position coordinates and optionally the improved current accuracy thereof are obtained in real time.

4. The method according to any one of the preceding claims, **characterised in that**
steps b) to e) can be repeated at least at one later first point in time (taₙ₊ₖ) and at least at one later second point in time (tbₙ₊ₖ), respectively; wherein each time step e) is executed, position information already determined at respective previous second points in time (tbₙ₊ₖ₋ₓ) can also be used for determining the current position information of the mobile communication device for the respective second point in time (tbₙ₊ₖ) in real time substantially at the respective second point in time (tbₙ₊ₖ).

5. The method according to any one of the preceding claims, **characterised in that**
additionally, in step a), at least one item of supplemental position information is predicted, which is associated with a third point in time, wherein the at least one third point in time is between the respective first point in time (taₙ) and the respective second point in time (tbₙ) ; that
in step b) the at least one additional item of predicted position information is also received by the mobile communication device; that
in step c) position information is provided which is associated with the at least one third point in time; and that
step e) comprises the steps of:
- correcting, in the mobile communication device, the position information provided in step c) and associated with the at least one third point in time on the basis of the supplemental position information associated with the respective third point in time and/or on the basis of the movement-related information available for the respective third point in time; and
- determining, in real time, improved current position information for the mobile communication device for the respective second point in time (tbₙ) on the basis of the position information associated with the respective first point in time (taₙ) and on the basis of the at least one corrected item of position information of the respective third point in time.

6. The method according to claim 5,
**characterised in that**
step a) is executed in the navigation augmentation system (20) and/or in the mobile communication device (30).

7. The method according to any one of the preceding claims, **characterised in that**
the supplemental position information contains correction values and/or functions for calculating correction values, optionally the accuracies of the correction values, and optionally system-related integrity data.

8. The method according to any one of the preceding claims, **characterised in that**
the position information determined in step c) and the movement-related information generated in step d) are not correlated physically in terms of their determination methods.

9. A mobile communication device (30) for improved determination of its current position in real time, comprising:
a first receiving device (34) adapted to receive position signals from a GNSS navigation system (40) in order to be able to determine position information defining the position of the mobile communication device for a first point in time (taₙ) ;
a movement detection device (33) for determining movement-related information describing the movement of the mobile communication device (30) at least in sections between a first point in time (taₙ) and a second point in time (tbₙ) ;
**characterised by**
a second receiving device (35) adapted to receive supplemental position information provided by an SBAS navigation augmentation system (20) associated with a first point in time (taₙ), wherein the first point in time (taₙ) is before the second point in time (tbₙ) ;
a checking device adapted to verify whether supplemental position information associated with the first point in time (taₙ) is available in the mobile communication device (30) at the time (tbₙ), and whether the mobile communication device (30) has moved between the first point in time (taₙ) and the second point in time (tbₙ), by employing a hypothesis test to calculate whether the sum of translational movements of the mobile communication device (30) is different from the zero vector with statistical significance;
a control device (38) adapted to re-determine position information for the first point in time (taₙ) on the basis of the position information associated with the first point in time (taₙ) and provided by the first receiving device (34) and on the basis of the supplemental position information associated with the first point in time (taₙ) and provided by the second receiving means (35), and which is further adapted to determine improved current position information for the second point in time (tbₙ) on the basis of the position information re-determined for the first point in time (taₙ) and the movement-related information determined by the movement detection device (33).

10. The mobile communication device according to claim 9, **characterised in that**
the first receiving device (34) includes a GPS receiver, and the second receiving device (35) includes an SBAS-capable receiver, in particular an EGNOS chip and/or a WAAS chip.

11. The mobile communication device according to claim 9 or 10, **characterised in that**
the movement detection device (33) includes a movement sensor adapted to determine movement-related information for calculating a translational movement at least in sections between the first point in time (taₙ) and the second point in time (tbₙ).

12. The mobile communication device according to any one of claims 9 to 11, **characterised in that**
the movement-related information includes movement data provided by the movement detection device (33), and/or position information provided by the first receiving device (34), and/or movement models for movement changes.

## Revendications

1. Procédé permettant une détermination améliorée de la position actuelle d'un dispositif de communication mobile (30) en temps réel, comprenant les étapes suivantes :
a1) fournir des informations supplémentaires de position au moyen d'un système complémentaire de navigation basé SBAS (20) et émettre des signaux au moyen d'un système GNSS (40) ;
a2) transmettre une information supplémentaire de position associée à un premier instant (taₙ) à un dispositif de communication mobile (30),
**caractérisé par**
b) la réception de l'information supplémentaire de position associée à un premier instant (taₙ) dans un dispositif de communication mobile (30), dont la position actuelle vise à être déterminée en temps réel pour un deuxième instant (tbₙ) , où le premier instant (taₙ) précède le deuxième instant (tbₙ) ;
c) la réception de signaux émis par le système GNSS (40) dans le dispositif de communication mobile (30) et la détermination, dans le dispositif de communication mobile (30), à partir des signaux reçus, d'une information de position qui est associée au premier instant (taₙ) ;
d) la génération, au moyen d'un dispositif de détection de mouvement (33) du dispositif de communication mobile (30), d'informations relatives au mouvement, où les informations relatives au mouvement décrivent le mouvement du dispositif de communication mobile (30) au moins en partie entre le premier instant (taₙ) et le deuxième instant (tbₙ) ;
e) à nouveau la détermination dans le dispositif de communication mobile (30) d'une information de position pour le premier instant (taₙ) en fonction de l'information de position associée au premier instant (taₙ) et déterminée à l'étape c) et des informations supplémentaires de position associées au premier instant (taₙ) et la détermination dans le dispositif de communication mobile (30) d'une information de position actuelle améliorée du dispositif de communication mobile (30) pour le deuxième instant (tbₙ) en fonction de l'information de position à nouveau déterminée pour le premier instant (taₙ) et des informations relatives au mouvement produites à l'étape d), où, avant la mise en oeuvre de l'étape e), il est contrôlé si, à l'instant (tbₙ), une information supplémentaire de position associée au premier instant (taₙ) est présente dans le dispositif de communication mobile (30) et si le dispositif de communication mobile (30) s'est déplacé entre le premier instant (taₙ) et le deuxième instant (tbₙ), en calculant au moyen d'un test d'hypothèse si la somme des mouvements en translation du dispositif de communication mobile (30) est statistiquement sensiblement différente du vecteur nul.

2. Procédé selon la revendication 1, **caractérisé en ce que** les informations relatives au mouvement contiennent des données de mouvement, lesquelles sont fournies par un dispositif de détection de mouvement (33) implémenté dans le dispositif de communication mobile (30), et/ou des informations de position, lesquelles sont fournies par un dispositif de réception (34) implémenté dans le dispositif de communication mobile (30) et lequel est conçu pour recevoir des signaux de positionnement, et/ou des modèles de mouvement pour des modifications de mouvement.

3. Procédé selon l'une quelconque des revendications précédentes, **caractérisé en ce que** les informations de position contiennent des coordonnées de position et, le cas échéant, la précision de celles-ci, et **en ce que**, à l'étape c), les coordonnées de position actuelles améliorées et, le cas échéant, la précision actuelle améliorée de celles-ci, sont obtenues en temps réel.

4. Procédé selon l'une quelconque des revendications précédentes, **caractérisé en ce que** les étapes b) à e) peuvent être réalisées une nouvelle fois respectivement à au moins un premier instant (taₙ₊ₖ) ultérieur et à au moins un deuxième instant (tbₙ₊ₖ) ultérieur, où, respectivement lors de la réalisation de l'étape e), les informations de position respectivement déterminées aux deuxièmes instants précédents (tbₙ₊ₖ₋ₓ) peuvent également être utilisées pour déterminer l'information de position actuelle du dispositif de communication mobile pour le deuxième instant (tbₙ₊ₖ) respectif en temps réel sensiblement au deuxième instant (tbₙ₊ₖ) respectif.

5. Procédé selon l'une quelconque des revendications précédentes, **caractérisé en ce que**
à l'étape a), au moins une information supplémentaire de position, qui est respectivement associée à un troisième instant, est prédite en plus, où l'au moins un troisième instant se situe entre le premier instant (taₙ) respectif et le deuxième instant (tbₙ) respectif, **en ce que**
à l'étape b), l'au moins une information supplémentaire de position prédite est également reçue par le dispositif de communication mobile, **en ce que**
à l'étape c), des informations de position, qui sont associées à l'au moins un troisième instant, sont fournies ; et **en ce que**
l'étape e) comporte les étapes suivantes :
- corriger, dans le dispositif de communication mobile, les informations de position fournies à l'étape c), lesquelles sont associées à l'au moins un troisième instant, en fonction de l'information supplémentaire de position associée au troisième instant respectif et/ou en fonction des informations relatives au mouvement présentes au troisième instant respectif, et
- déterminer une information de position actuelle améliorée du dispositif de communication mobile pour le deuxième instant (tbₙ) respectif en fonction de l'information de position associée au premier instant (taₙ) respectif et en fonction de l'au moins une information de position corrigée du troisième instant respectif en temps réel.

6. Procédé selon la revendication 5, **caractérisé en ce que** l'étape a) est réalisée dans le système complémentaire de navigation (20) et/ou dans le dispositif de communication mobile (30).

7. Procédé selon l'une quelconque des revendications précédentes, **caractérisé en ce que** les informations supplémentaires de position contiennent des valeurs de correction et/ou des fonctions permettant de calculer des valeurs de correction, le cas échéant les précisions des valeurs de correction et, le cas échéant, des données d'intégrité liées au système.

8. Procédé selon l'une quelconque des revendications précédentes, **caractérisé en ce que** les informations de position déterminées à l'étape c) et les informations de position relatives au mouvement produites à l'étape d) ne sont pas corrélées physiquement par rapport à leurs méthodes de détermination.

9. Dispositif de communication mobile (30) permettant la détermination améliorée de sa position actuelle en temps réel, comprenant :
un premier dispositif de réception (34), qui est conçu pour recevoir des signaux de position d'un système de navigation GNSS (40), afin de pouvoir déterminer des informations de position, lesquelles définissent la position du dispositif de communication mobile pour un premier instant (taₙ),
un dispositif de détection de mouvement (33) destiné à déterminer des informations relatives au mouvement, lesquelles décrivent le mouvement du dispositif de communication mobile (30) au moins en partie entre un premier instant (taₙ) et un deuxième instant (tbₙ),
**caractérisé par**
un deuxième dispositif de réception (35), qui est conçu pour recevoir des informations supplémentaires de position fournies par un système complémentaire de navigation basé SBAS (20), lesquelles sont associées à un premier instant (taₙ), où le premier instant (taₙ) précède le deuxième instant (tbₙ),
un dispositif de contrôle, qui est conçu pour contrôler si une information supplémentaire de position associée au premier instant (taₙ) est présente dans le dispositif de communication mobile (30) à l'instant (tbₙ) et si le dispositif de communication mobile (30) s'est déplacé entre le premier instant (taₙ) et le deuxième instant (tbₙ), en calculant au moyen d'un test d'hypothèse si la somme des mouvements en translation du dispositif de communication mobile (30) est statistiquement sensiblement différente du vecteur nul,
un dispositif de commande (38), qui est conçu pour déterminer à nouveau une information de position pour le premier instant (taₙ) en fonction de l'information de position associée au premier instant (taₙ), laquelle information est fournie par le premier dispositif de réception (34), et des informations supplémentaires de position associées au premier instant (taₙ), lesquelles sont fournies par le deuxième dispositif de réception (35), et qui est conçu en outre pour déterminer une information de position actuelle améliorée pour le deuxième instant (tbₙ) en fonction de l'information de position déterminée à nouveau pour le premier instant (taₙ) et des informations relatives au mouvement déterminées par le dispositif de détection de mouvement (33).

10. Dispositif de communication mobile selon la revendication 9, **caractérisé en ce que** le premier dispositif de réception (34) comprend un récepteur GPS et le deuxième dispositif de réception (35) comprend un récepteur SBAS, en particulier une puce EGNOS et/ou une puce WAAS.

11. Dispositif de communication mobile selon la revendication 9 ou 10, **caractérisé en ce que** le dispositif de détection de mouvement (33) comprend un capteur de mouvement, lequel est conçu pour déterminer des informations liées au mouvement pour le calcul d'un mouvement en translation au moins en partie entre le premier instant (taₙ) et le deuxième instant (tbₙ) .

12. Dispositif de communication mobile selon l'une quelconque des revendications 9 à 11, **caractérisé en ce que** les informations relatives au mouvement contiennent des données de mouvement, lesquelles sont fournies par le dispositif de détection de mouvement (33), et/ou des informations de position, lesquelles sont fournies par le premier dispositif de réception (34), et/ou des modèles de mouvement pour des modifications de mouvement.
